(19) Europäisches Patentamt / European Patent Office / Office européen des brevets

(11) **EP 4 152 858 A1**

(12) **EUROPEAN PATENT APPLICATION**
published in accordance with Art. 153(4) EPC

(43) Date of publication:
**22.03.2023 Bulletin 2023/12**

(21) Application number: **21805072.2**

(22) Date of filing: **13.05.2021**

(51) International Patent Classification (IPC):
**H04W 72/04** (2009.01)

(52) Cooperative Patent Classification (CPC):
**H04W 72/04**

(86) International application number:
**PCT/CN2021/093528**

(87) International publication number:
**WO 2021/228182 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 CN 202010414782**

(71) Applicant: **Huawei Technologies Co., Ltd.
Shenzhen, Guangdong 518129 (CN)**

(72) Inventors:
- **ZHANG, Yongping**
  **Shenzhen, Guangdong 518129 (CN)**
- **FENG, Shulan**
  **Shenzhen, Guangdong 518129 (CN)**
- **LIU, Xiaoqing**
  **Shenzhen, Guangdong 518129 (CN)**
- **LI, Tie**
  **Shenzhen, Guangdong 518129 (CN)**

(74) Representative: **Gill Jennings & Every LLP
The Broadgate Tower
20 Primrose Street
London EC2A 2ES (GB)**

(54) **PDSCH TRANSMISSION METHOD AND APPARATUS**

(57)    This application provides a PDSCH transmission method and apparatus, and relates to the field of communication technologies, to reduce complexity of processing a PDSCH by a terminal device. The method includes: The terminal device receives first DCI and second DCI. First indication information included in one piece of DCI that is in the first DCI and the second DCI and that has the first indication information indicates whether one or more time-frequency resource groups in a first PDSCH and a second PDSCH are available. In this way, there is only one type of interference strength between the first PDSCH and the second PDSCH, and the terminal device may process the first PDSCH and the second PDSCH by using a descrambling manner corresponding to the interference strength. In this case, the terminal may receive both of the first PDSCH and the second PDSCH. This reduces complexity of processing the PDSCH by the terminal device.

FIG. 4

**Description**

This application claims priority to Chinese Patent Application No. 202010414782.9, filed with the China National Intellectual Property Administration on May 15, 2020 and entitled "PDSCH Transmission Method and Apparatus", which is incorporated herein by reference in its entirety.

**TECHNICAL FIELD**

This application relates to the field of communication technologies, and in particular, to a physical downlink shared channel (physical downlink shared channel, PDSCH) transmission method and apparatus.

**BACKGROUND**

In a multi-downlink control information (downlink control information, DCI) transmission mode of a multi-transmission reception point (transmission reception point, TRP) technology, in two TRPs (denoted as a first TRP and a second TRP), the first TRP sends first DCI to schedule a first PDSCH, and the second TRP sends second DCI to schedule a second PDSCH. There may be an overlapping time-frequency resource (denoted as a first time-frequency resource) between the first PDSCH and the second PDSCH. When the first PDSCH and the second PDSCH are transmitted on the first time-frequency resource, strong interference is caused to each other. In the first time-frequency resource, there may be a time-frequency resource (denoted as a second time-frequency resource) configured for rate matching. If DCI indicates that the second time-frequency resource can be used for rate matching (activated), a PDSCH scheduled by using the DCI cannot be transmitted on the second time-frequency resource. If DCI indicates that the second time-frequency resource cannot be used for rate matching (not activated), a PDSCH scheduled by using the DCI can be transmitted on the second time-frequency resource.

In this case, if the first DCI and the second DCI indicate different cases of whether the second time-frequency resource is available, for example, the first DCI indicates that the second time-frequency resource is available, and the second DCI indicates that the second time-frequency resource is unavailable, the first PDSCH is not transmitted on the second time-frequency resource, and the second PDSCH is transmitted on the second time-frequency resource. On the second time-frequency resource, the first PDSCH causes weak interference to the second PDSCH. On the first time-frequency resource other than the second time-frequency resource, the first PDSCH causes strong interference to the second PDSCH. In this case, the second PDSCH includes two cases: strong interference and weak interference. A terminal device needs to separately descramble the strong-interference part and the weak-interference part on the second PDSCH by using two descrambling manners, to complete descrambling of the second PDSCH. In this case, the terminal device needs to separately receive the first PDSCH and the second PDSCH. The terminal device descrambles the PDSCH by using the two manners, and separately receives the first PDSCH and the second PDSCH. This increases complexity of processing the PDSCH by the terminal device.

**SUMMARY**

This application provides a PDSCH transmission method and apparatus, to resolve a problem in a conventional technology that a process of processing a PDSCH by a terminal device is too complex.

To resolve the foregoing problem, the following technical solutions are used in this application.

According to a first aspect, a PDSCH transmission method is provided. The method includes: A terminal device receives first DCI and second DCI. The first DCI is associated with a first control resource set (control resource set, CORESET). The second DCI is associated with a second CORESET. The first DCI is used for scheduling a first PDSCH. The second DCI is used for scheduling a second PDSCH. The first PDSCH and the second PDSCH have completely overlapping time-frequency resources. The first DCI and the second DCI each have first indication information, and the first indication information in the first DCI is the same as that in the second DCI. The first indication information included in the first DCI and the second DCI indicates whether one or more time-frequency resource groups in the first PDSCH and the second PDSCH are available. The time-frequency resource group includes one or more resource sets, and the time-frequency resource group is configured by using radio resource control (radio resource control, RRC) signaling. Configuration information of the first CORESET includes first identification information. Configuration information of the second CORESET includes second identification information. The first identification information and the second identification information have different values.

Based on the foregoing technical solution, in multi-TRP multi-DCI transmission, the first indication information in one piece of DCI in the first DCI and the second DCI that are sent by a network device indicate whether the one or more time-frequency resource groups in the first PDSCH and the second PDSCH are available. If the one or more time-frequency resource groups in the first PDSCH and the second PDSCH are available, neither the first PDSCH nor the second PDSCH performs rate matching on the one or more time-frequency resource groups. In other words, both the first PDSCH and the second PDSCH may be transmitted on the one or more time-frequency resource groups. In this way, in the overlapping time-frequency resources between the first PDSCH and the second PDSCH, there is always strong interference between the first PDSCH and the second PDSCH. If the one or more time-frequency resource groups in the first PDSCH and the second PDSCH are not available, both the first PDSCH and the second PDSCH perform rate matching on the one or more time-frequency resource groups. In other words, neither the first PDSCH nor the second PDSCH is transmitted on the one or more time-frequency resource groups. In this way, neither the first PDSCH nor the second PDSCH is transmitted on the one or more time-frequency resource groups, and therefore the first PDSCH and the second PDSCH does not interfere with each other. On an overlapping time-frequency resource other than the one or more time-frequency resource groups, there is always strong interference between the first PDSCH and the second PDSCH.

In this way, in this embodiment of this application, the first indication information in one piece of DCI indicates whether the one or more time-frequency resource groups in the first PDSCH and the second PDSCH are available. In this way, there is only strong interference and no weak interference between the first PDSCH and the second PDSCH on the overlapping time-frequency resources. Based on this, the terminal device can descramble the PDSCH only by using a strong-interference descrambling manner. In addition, in this scenario, the terminal device may receive both of the first PDSCH and the second PDSCH, and does not need to separately receive the first PDSCH and the second PDSCH. This reduces complexity of processing the PDSCH by the terminal device.

With reference to the first aspect, in a possible design, the first indication information is at least one of the following: a rate matching indication (Rate matching indicator) field and a zero power channel state information-reference signal trigger (ZP CSI-RS trigger) field.

With reference to the first aspect, in a possible design, if the first DCI has the first indication information, and the second DCI does not have the first indication information, one piece of DCI having the first indication information is the first DCI. In other words, the first indication information included in the first DCI indicates whether the one or more time-frequency resource groups in the first PDSCH and the second PDSCH are available.

With reference to the first aspect, in a possible design, if the first DCI does not have the first indication information, but the second DCI has the first indication information, one piece of DCI having the first indication information is the second DCI. In other words, the first indication information included in the second DCI indicates whether the one or more time-frequency resource groups in the first PDSCH and the second PDSCH are available.

Based on this, in a scenario in which only one piece of DCI in the first DCI and the second DCI has the first indication information, the terminal device can accurately determine, from the first DCI and the second DCI, one piece of DCI having the first indication information.

With reference to the first aspect, in a possible design, if the first DCI and the second DCI each have the first indication information, one piece of DCI having the first indication information is DCI that is in the first DCI and the second DCI and that meets a preset condition. In other words, the first indication information included in the DCI that is in the first DCI and the second DCI and that meets the preset condition indicates whether the one or more time-frequency resource groups in the first PDSCH and the second PDSCH are available.

Based on this, in a scenario in which the first DCI and the second DCI each have the first indication information, the terminal device can accurately determine, from the first DCI and the second DCI, one piece of DCI having the first indication information.

With reference to the first aspect, in a possible design, if the first indication information in the first DCI is the same as that in the second DCI, the DCI that meets the preset condition is either the first DCI or the second DCI. In other words, the first indication information included in either the first DCI or the second DCI indicates whether the one or more time-frequency resource groups in the first PDSCH and the second PDSCH are available. Based on this, in a scenario in which the first indication information in the first DCI is the same as that in the second DCI, the terminal device can accurately determine, from the first DCI and the second DCI, one piece of DCI having the first indication information.

With reference to the first aspect, in a possible design, if the first indication information in the first DCI is different from that in the second DCI, the DCI that meets the preset condition is any one of the following:

DCI associated with a CORESET whose control resource set pool index CORESETPoolIndex is 0; DCI associated with a CORESET whose CORESETPoolIndex is 1; DCI associated with a CORESET with a largest CORESET identifier (identity, ID); DCI associated with a CORESET with a smallest CORESET-ID; DCI associated with a CORESET whose start symbol position is ranked first; DCI associated with a CORESET whose start symbol position is same and whose end symbol position is ranked first; DCI associated with a CORESET that is first blindly detected by the terminal device; DCI associated with a CORESET that is last blindly detected by the terminal device; and DCI last received by the terminal device. Based on this, the terminal device can accurately determine the DCI that is in the first DCI and the second DCI and that meets the preset condition.

With reference to the first aspect, in a possible design, the terminal device sends second indication information to the network device. The second indication information indicates whether the terminal device supports receiving of N pieces of DCI, and N ≥ 2. A CORESETPoolIndex in a plurality of CORESETs associated with the N pieces of DCI has two different values, and values of first indication information included in the N pieces of DCI are different. N PDSCHs scheduled by the N pieces of DCI have overlapping time-frequency resources. Based on this, if the terminal device can simultaneously receive the N pieces of DCI used for scheduling the PDSCHs, it indicates that the terminal device has a function of simultaneously processing a plurality of PDSCHs having different interference strengths. In this case, the network device can flexibly select a DCI indication manner for the terminal device based on the function of the terminal device. This improves an applicable scenario of the solution and configuration flexibility of the network device.

With reference to the first aspect, in a possible design, the terminal device determines whether a plurality of CORESETs configured by the network device have two different CORESETPoolIndex values. If the plurality of CORESETs configured by the network device have two different CORESETPoolIndex values, the terminal device determines that duration in which the terminal device processes the first PDSCH is first duration. If the plurality of CORESETs configured by the network device do not have two different CORESETPoolIndex values, the terminal device determines that duration in which the terminal device processes the first PDSCH is second duration. The first duration is a sum of the second duration and a preset delay.

Based on this, the terminal device may determine, based on whether the CORESET has two different CORESETPoolIndex values, a quantity of PDSCHs scheduled by the network device for the terminal device. When the network device schedules two PDSCHs for the terminal device, the first duration for processing the PDSCHs by the terminal device includes a waiting time for the terminal device to complete blind detection on all CORESETs, so that sufficient time is reserved for the terminal device to process the PDSCHs. In this way, the terminal device can process the PDSCH without increasing device complexity.

According to a second aspect, a PDSCH transmission method is provided. The method includes: A network device sends first DCI on a first CORESET, and sends second DCI on a second CORESET. The first DCI is used for scheduling a first PDSCH. The second DCI is used for scheduling a second PDSCH. The first PDSCH and the second PDSCH have completely overlapping time-frequency resources. The first DCI and the second DCI each have first indication information, and the first indication information in the first DCI is the same as that in the second DCI. The first indication information included in the first DCI and the second DCI indicates whether one or more time-frequency resource groups in the first PDSCH and the second PDSCH are available. The time-frequency resource group includes one or more resource sets, and the time-frequency resource group is configured by using RRC signaling. Configuration information of the first CORESET includes first identification information. Configuration information of the second CORESET includes second identification information. The first identification information and the second identification information have different values.

With reference to the first aspect, in a possible design, the first indication information is at least one of the following: a rate matching indication (Rate matching indicator) field and a zero power channel state information-reference signal trigger (ZP CSI-RS trigger) field.

With reference to the second aspect, in a possible design, one piece of DCI in the first DCI and the second DCI has the first indication information. The DCI is DCI that meets a preset condition, and one piece of DCI having the first indication information is the DCI. In other words, the first indication information included in the DCI indicates whether the one or more time-frequency resource groups in the first PDSCH and the second PDSCH are available.

With reference to the second aspect, in a possible design, the first DCI and the second DCI have the same first indication information. One piece of DCI having the first indication information is either the first DCI or the second DCI. In other words, the first indication information included in either the first DCI or the second DCI indicates whether the one or more time-frequency resource groups in the first PDSCH and the second PDSCH are available.

With reference to the second aspect, in a possible design, the first DCI and the second DCI have different first indication information. One piece of DCI having the first indication information is DCI that is in the first DCI and the second DCI and that meets a preset condition. In other words, the first indication information included in the DCI that is in the first DCI and the second DCI and that meets the preset condition indicates whether the one or more time-frequency resource groups in the first PDSCH and the second PDSCH are available.

With reference to the second aspect, in a possible design, the DCI that meets the preset condition is any one of the following:

DCI associated with a CORESET whose control resource set pool index CORESETPoolIndex is 0; DCI associated with a CORESET whose CORESETPoolIndex is 1; DCI associated with a CORESET with a largest CORESET-ID; DCI associated with a CORESET with a smallest CORESET-ID; DCI associated with a CORESET whose start symbol position is ranked first; DCI associated with a CORESET whose start symbol position is same and whose end symbol position is ranked first; DCI associated with a CORESET that is first blindly detected by a terminal device; DCI associated with a CORESET that is last blindly detected by the terminal device; and DCI last received by the terminal device.

With reference to the second aspect, in a possible design, the network device receives second indication information from the terminal device. The second indication information indicates whether the terminal device supports receiving of N pieces of DCI, and N $\geq$ 2. A CORESETPoolIndex in a plurality of CORESETs associated with the N pieces of DCI has two different values, and values of first indication information included in the N pieces of DCI are different. N PDSCHs scheduled by the N pieces of DCI have overlapping time-frequency resources.

According to a third aspect, a PDSCH transmission method is provided. The method includes: A terminal device determines whether a plurality of CORESETs configured by a network device have two different CORESETPoolIndex values. If the plurality of CORESETs configured by the network device have two different CORESETPoolIndex values, the terminal device determines that duration in which the terminal device processes the first PDSCH is first duration. If the plurality of CORESETs configured by the network device do not have two different CORESETPoolIndex values, the terminal device determines that duration in which the terminal device processes the first PDSCH is second duration. The first duration is a sum of the second duration and a preset delay.

With reference to the third aspect, in a possible design, the preset delay is a waiting time reserved for the terminal device to complete blind detection on another CORESET after the terminal device completes blind detection on one CORESET.

With reference to the third aspect, in a possible design, the terminal device determines the preset delay; and the terminal device reports the preset delay to the network device.

According to a fourth aspect, a terminal device is provided. The terminal device includes a communication unit and a processing unit.

The processing unit is configured to indicate the communication unit to receive first DCI and second DCI. The first DCI is associated with a first CORESET. The second DCI is associated with a second CORESET. The first DCI is used for scheduling a first PDSCH. The second DCI is used for scheduling a second PDSCH. The first PDSCH and the second PDSCH have completely overlapping time-frequency resources. The first DCI and the second DCI each have first indication information, and the first indication information in the first DCI is the same as that in the second DCI. The first indication information included in the first DCI and the second DCI indicates whether one or more time-frequency resource groups in the first PDSCH and the second PDSCH are available. The time-frequency resource group includes one or more resource sets, and the time-frequency resource group is configured by using RRC signaling. Configuration information of the first CORESET includes first identification information. Configuration information of the second CORESET includes second identification information. The first identification information and the second identification information have different values.

With reference to the fourth aspect, in a possible design, if the first DCI has the first indication information, but the second DCI does not have the first indication information, one piece of DCI having the first indication information is the first DCI.

With reference to the fourth aspect, in a possible design, if the first DCI does not have the first indication information, but the second DCI has the first indication information, one piece of DCI having the first indication information is the second DCI.

With reference to the fourth aspect, in a possible design, if the first DCI and the second DCI each have the first indication information, one piece of DCI having the first indication information is DCI that is in the first DCI and the second DCI and that meets a preset condition.

With reference to the fourth aspect, in a possible design, if the first indication information in the first DCI is the same as that in the second DCI, the DCI that meets the preset condition is either the first DCI or the second DCI.

With reference to the fourth aspect, in a possible design, if the first indication information in the first DCI is different from that in the second DCI, the DCI that meets the preset condition is any one of the following:

DCI associated with a CORESET whose control resource set pool index CORESETPoolIndex is 0; DCI associated with a CORESET whose CORESETPoolIndex is 1; DCI associated with a CORESET with a largest CORESET-ID; DCI associated with a CORESET with a smallest CORESET-ID; DCI associated with a CORESET whose start symbol position is ranked first; DCI associated with a CORESET whose start symbol position is same and whose end symbol position is ranked first; DCI associated with a CORESET that is first blindly detected by a terminal device; DCI associated with a CORESET that is last blindly detected by the terminal device; and DCI last received by the terminal device.

With reference to the fourth aspect, in a possible design, the processing unit is further configured to indicate the communication unit to send second indication information to a network device. The second indication information indicates whether the terminal device supports receiving of N pieces of DCI, and N $\geq$ 2. A CORESETPoolIndex in a plurality of CORESETs associated with the N pieces of DCI has two different values, and values of first indication information included in the N pieces of DCI are different. N PDSCHs scheduled by the N pieces of DCI have overlapping time-frequency resources.

With reference to the fourth aspect, in a possible design, the processing unit is further configured to determine whether a plurality of CORESETs configured by the network device have two different CORESETPoolIndex values. If the plurality of CORESETs configured by the network device have two different CORESETPoolIndex values, it is determined that duration in which the terminal device processes the first PDSCH is first duration. If the plurality of CORESETs configured by the network device do not have two different CORESETPoolIndex values, it is determined that duration in which the terminal device processes the first PDSCH is second duration. The first duration is a sum of the second duration and a preset delay.

According to a fifth aspect, a network device is provided. The network device includes a communication unit and a processing unit. The processing unit is configured to indicate the communication unit to send first DCI on a first CORESET, and send second DCI on a second CORESET. The first DCI is used for scheduling a first PDSCH. The second DCI is used for scheduling a second PDSCH. The first PDSCH and the second PDSCH have completely overlapping time-frequency resources. The first DCI and the second DCI each have first indication information, and the first indication information in the first DCI is the same as that in the second DCI. The first indication information included in the first DCI and the second DCI indicates whether one or more time-frequency resource groups in the first PDSCH and the second PDSCH are available. The time-frequency resource group includes one or more resource sets, and the time-frequency resource group is configured by using RRC signaling. Configuration information of the first CORESET includes first identification information. Configuration information of the second CORESET includes second identification information. The first identification information and the second identification information have different values.

With reference to the fifth aspect, in a possible design, one piece of DCI in the first DCI and the second DCI has the first indication information. The DCI is DCI that meets a preset condition.

With reference to the fifth aspect, in a possible design, the first DCI and the second DCI have the same first indication information. One piece of DCI having the first indication information is either the first DCI or the second DCI.

With reference to the fifth aspect, in a possible design, the first DCI and the second DCI have different first indication information. One piece of DCI having the first indication information is DCI that is in the first DCI and the second DCI and that meets a preset condition.

With reference to the fifth aspect, in a possible design, the DCI that meets the preset condition is any one of the following:

DCI associated with a CORESET whose control resource set pool index CORESETPoolIndex is 0; DCI associated with a CORESET whose CORESETPoolIndex is 1; DCI associated with a CORESET with a largest CORESET-ID; DCI associated with a CORESET with a smallest CORESET-ID; DCI associated with a CORESET whose start symbol position is ranked first; DCI associated with a CORESET whose start symbol position is same and whose end symbol position is ranked first; DCI associated with a CORESET that is first blindly detected by a terminal device; DCI associated with a CORESET that is last blindly detected by the terminal device; and DCI last received by the terminal device.

With reference to the fifth aspect, in a possible design, the processing unit is further configured to indicate the communication unit to receive second indication information from the terminal device. The second indication information indicates whether the terminal device supports receiving of N pieces of DCI, and N ≥ 2. A CORESETPoolIndex in a plurality of CORESETs associated with the N pieces of DCI has two different values, and values of first indication information included in the N pieces of DCI are different. N PDSCHs scheduled by the N pieces of DCI have overlapping time-frequency resources.

According to a sixth aspect, a terminal device is provided. The terminal device includes a processing unit and a communication unit.

The processing unit is configured to determine whether a plurality of CORESETs configured by a network device have two different CORESETPoolIndex values. If the plurality of CORESETs configured by the network device have two different CORESETPoolIndex values, it is determined that duration in which the terminal device processes a first PDSCH is first duration. If the plurality of CORESETs configured by the network device do not have two different CORESETPoolIndex values, it is determined that duration in which the terminal device processes the first PDSCH is second duration. The first duration is a sum of the second duration and a preset delay. The processing unit may communicate with another network entity by using the communication unit.

With reference to the sixth aspect, in a possible design, the preset delay is a waiting time reserved for the terminal device to complete blind detection on another CORESET after the terminal device completes blind detection on one CORESET.

With reference to the sixth aspect, in a possible design, the processing unit is configured to determine the preset delay; and the communication unit is configured to report the preset delay to the network device.

According to a seventh aspect, this application provides a communication apparatus, including a processor and a storage medium. The storage medium includes instructions, and the processor is configured to run the instructions, to implement the method described in any one of the first aspect or the possible implementations of the first aspect. The communication apparatus may be a terminal device, or may be a chip in a terminal device.

According to an eighth aspect, this application provides a communication apparatus, including a processor and a storage medium. The storage medium includes instructions, and the processor is configured to run the instructions, to implement the method described in any one of the second aspect or the possible implementations of the second aspect. The communication apparatus may be a network device, or may be a chip in a network device.

According to a ninth aspect, this application provides a communication apparatus, including a processor and a storage medium. The storage medium includes instructions, and the processor is configured to run the instructions, to implement the method described in any one of the third aspect or the possible implementations of the third aspect. The communication apparatus may be a terminal device, or may be a chip in a terminal device.

According to a tenth aspect, this application provides a computer-readable storage medium. The computer-readable storage medium stores instructions, and when the instructions are run on a terminal device, the terminal device is enabled to perform the method described in any one of the first aspect or the possible implementations of the first aspect.

According to an eleventh aspect, this application provides a computer-readable storage medium. The computer-readable storage medium stores instructions. When the instructions are run on a network device, the network device is enabled to perform the method described in any one of the second aspect or the possible implementations of the second aspect.

According to a twelfth aspect, this application provides a computer-readable storage medium. The computer-readable storage medium stores instructions. When the instructions are run on a terminal device, the terminal device is enabled to perform the method described in any one of the third aspect or the possible implementations of the third aspect.

According to a thirteenth aspect, this application provides a computer program product including instructions. When the computer program product runs on a terminal device, the terminal device is enabled to perform the method described in any one of the first aspect or the possible implementations of the first aspect.

According to a fourteenth aspect, this application provides a computer program product including instructions. When the computer program product runs on a network device, the network device is enabled to perform the method described in any one of the second aspect or the possible implementations of the second aspect.

According to a fifteenth aspect, this application provides a computer program product including instructions. When the computer program product runs on a terminal device, the terminal device is enabled to perform the method described in any one of the third aspect or the possible implementations of the third aspect.

According to a sixteenth aspect, this application provides a communication system, including a terminal device and a network device that communicates with the terminal device. The terminal device is configured to perform the method described in any one of the first aspect or the possible implementations of the first aspect; or configured to perform the method described in any one of the third aspect or the possible implementations of the third aspect. The network device is configured to perform the method described in any one of the second aspect or the possible implementations of the second aspect.

It should be understood that, descriptions of technical features, technical solutions, beneficial effects, or similar words in this application do not imply that all features and advantages can be implemented in any individual embodiment. On the contrary, it may be understood that, the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily be specific to a same embodiment. Further, the technical features, the technical solutions, and the beneficial effects described in embodiments may be combined in any proper manner. A person skilled in the art may understand that an embodiment may be implemented without one or more specific technical features, technical solutions, or beneficial effects in a specific embodiment. In other embodiments, additional technical features and beneficial effects may be further identified in a specific embodiment that does not reflect all embodiments.

## BRIEF DESCRIPTION OF DRAWINGS

FIG. 1 is a diagram of a system architecture of a communication system according to an embodiment of this application;
FIG. 2 is a diagram of a system architecture of a multi-TRP multi-DCI transmission system according to an embodiment of this application;
FIG. 3 is a diagram of a system architecture of a multi-TRP single-DCI transmission system according to an embodiment of this application;
FIG. 4 is a schematic flowchart of a PDSCH transmission method according to an embodiment of this application;
FIG. 5 is a schematic flowchart of another PDSCH transmission method according to an embodiment of this application;
FIG. 6 is a schematic flowchart of another PDSCH transmission method according to an embodiment of this application;
FIG. 7 is a schematic flowchart of another PDSCH transmission method according to an embodiment of this application;
FIG. 8 is a schematic diagram of a structure of a communication apparatus according to an embodiment of this application;

FIG. 9 is a schematic diagram of a hardware structure of a communication apparatus according to an embodiment of this application;

FIG. 10 is a schematic diagram of a hardware structure of another communication apparatus according to an embodiment of this application;

FIG. 11 is a schematic diagram of a hardware structure of a terminal device according to an embodiment of this application; and

FIG. 12 is a schematic diagram of a hardware structure of a network device according to an embodiment of this application.

## DESCRIPTION OF EMBODIMENTS

In descriptions of this application, unless otherwise specified, "/" means "or". For example, A/B may represent A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, words such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

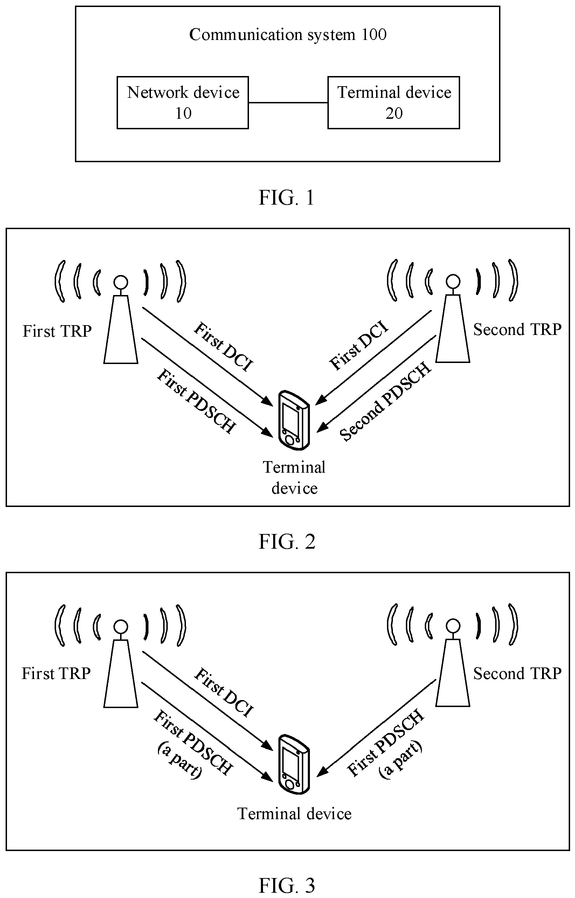

A PDSCH transmission method provided in an embodiment of this application is applied to a communication system 100 shown in FIG. 1. As shown in FIG. 1, the communication system 100 includes a network device 10 and a terminal device 20. There may be a plurality of network devices 10. For example, the network device 10 is two network devices: a first network device and a second network device. The first network device and the second network device can simultaneously provide a data transmission service for the terminal device 20.

When both the first network device and the second network device provide a data transmission service for the terminal device, the first network device sends first DCI to the terminal device, where the first DCI is used for scheduling a first PDSCH; and the second network device sends second DCI to the terminal device, where the second DCI is used for scheduling a second PDSCH.

In an example, the network device may be a TRP. For example, the first network device is a first TRP, and the second network device is a second TRP.

A communication system in embodiments of this application includes but is not limited to a long term evolution (long term evolution, LTE) system, a 5th-generation (5th-generation, 5G) system, a new radio (new radio, NR) system, a wireless local area network (wireless local area networks, WLAN) system, a future evolved system, or a system converging a plurality of communication technologies. For example, a method provided in embodiments of this application may be specifically applied to an evolved universal terrestrial radio access network (evolved-universal terrestrial radio access network, E-UTRAN) system and a next generation-radio access network (next generation-radio access network, NG-RAN) system.

A network device in embodiments of this application is a network-side entity configured to send a signal, receive a signal, or send a signal and receive a signal. The network device may be an apparatus that is deployed in a radio access network (radio access network, RAN) and that provides a wireless communication function for a terminal device, for example, may be a TRP, a base station (for example, an evolved NodeB (evolved NodeB, eNB or eNodeB), a next-generation base station node (next generation node base station, gNB), a next-generation eNB (next generation eNB, ng-eNB)), various forms of control nodes (for example, a network controller, a radio controller (for example, a radio controller in a cloud radio access network (cloud radio access network, CRAN) scenario), or a road side unit (road side unit, RSU). Specifically, the network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminal devices that fall within coverage of the plurality of base stations. In systems using different radio access technologies (radio access technology, RAT), names of devices having a base station function may be different. For example, the base station may be referred to as an eNB or an eNodeB in an LTE system, and may be referred to as a gNB in a 5G system or an NR system. A specific name of the base station is not limited in this application. The network device may alternatively be a network device in a future evolved public land mobile network (public land mobile network, PLMN) or the like.

A terminal device in embodiments of this application is a user-side entity configured to receive a signal, send a signal, or receive a signal and send a signal. The terminal device is configured to provide one or more of a voice service and a data connectivity service for a user. The terminal device may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal device may be a vehicle-to-everything (vehicle to everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle). Alternatively, the terminal device may be a device-to-device (device to device, D2D) device, for example, an electricity meter or a water meter. Alternatively, the terminal device may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smart phone (smart phone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device or another processing device connected to a wireless modem, a vehicle-mounted device, or a wearable device (which may also be referred to as a wearable intelligent device). The terminal device may alternatively be a terminal device in a next-generation communication system, for example, a terminal device in a 5G system, a terminal device in a future evolved PLMN, or a terminal device in an NR system.

To make this application clearer, some concepts in this application are first briefly described.

1. Multi-TRP transmission

In a Release-16 version of a fifth-generation radio access system standard, namely, new radio (new radio, NR), a multi-TRP transmission technology is provided. The multi-TRP transmission technology is a technology in which a plurality of TRPs simultaneously provide a data transmission service for a terminal device. For example, two TRPs simultaneously provide a data transmission service for the terminal device.

The multi-TRP transmission technology may be further classified into two transmission modes: a transmission mode 1 with multi-DCI transmission, and a transmission mode 2 with single-DCI transmission. The following describes the two transmission modes in detail by using an example in which the plurality of TRPs are two TRPs: a first TRP and a second TRP.

Transmission mode 1: multi-DCI transmission

Multi-DCI transmission means that the plurality of TRPs separately send a plurality of pieces of DCI to schedule a plurality of PDSCHs for the terminal device. The TRP, the DCI, and the PDSCH are in a one-to-one correspondence. In other words, one TRP sends one piece of DCI to schedule one PDSCH for the terminal device.

For example, as shown in FIG. 2, the first TRP sends first DCI to the terminal device. The first DCI is used for scheduling a first PDSCH. The second TRP sends second DCI to the terminal device. The second DCI is used for scheduling a second PDSCH. In this way, the first TRP and the second TRP separately send PDSCHs to the terminal device, to simultaneously provide a data transmission service for the terminal device.

Transmission mode 2: single-DCI transmission

Single-DCI transmission means that only one of the plurality of TRPs sends DCI to the terminal device, and the DCI is used to schedule only one PDSCH. A part of layers or demodulation reference signal (demodulation reference signal, DMRS) ports in the PDSCH are mapped to a TRP in the plurality of TRPs other than the TRP. The other part of layers or DMRS ports in the PDSCH are sent on another TRP.

For example, as shown in FIG. 3, the first TRP sends first DCI to the terminal device. The first DCI is used for scheduling a first PDSCH. One part of the first PDSCH is sent by the first TRP, and the other part of the first PDSCH is sent by the second TRP.

2. DCI

In an NR system, a physical downlink control channel (physical downlink control channel, PDCCH) used for scheduling a PDSCH carries DCI. The DCI includes fields such as a frequency domain resource assignment (frequency domain resource assignment) information field, a time domain resource assignment (time domain resource assignment) information field, and a rate matching indication field.

The frequency domain resource assignment (frequency domain resource assignment) information field indicates a position of a frequency domain resource. The time domain resource assignment (time domain resource assignment) information field indicates resource allocation in time domain. A terminal device may determine, based on frequency domain resource assignment (frequency domain resource assignment) information and time domain resource assignment (time domain resource assignment) information, a time-frequency resource block used for transmitting a PDSCH and a DMRS of the PDSCH, and learn of a mapping type of the PDSCH scheduled by using the DCI and a position of the DMRS of the PDSCH. For related descriptions of the mapping type of the PDSCH, refer to content in the following embodiments. Details are not described herein again.

It should be noted that a symbol (symbol) in embodiments of this application may also be referred to as a time domain symbol. The symbol may be, for example, an orthogonal frequency division multiplexing (orthogonal frequency division multiplexing) symbol in a long term evolution (long term evolution, LTE) system or an NR system, or another symbol in a future system. Descriptions are uniformly provided herein, and details are not described below again.

3. Rate matching (Rate matching)

Rate matching means that bits on a transmission channel (such as a PDSCH) are repeated (repeated) or punctured (punctured) to match a carrying capability of a physical channel and reach a bit rate required by a transmission format during channel mapping.

DCI that is sent by a network device and that is used for scheduling the PDSCH may include a rate matching indication field (Rate matching indicator) and/or a zero power channel state information reference signal trigger (ZP CSI-RS trigger) field, to trigger a time-frequency resource used for rate matching. A specific implementation is described as follows.

When configuring a time-frequency resource for a terminal device, the network device configures a corresponding rate matching pattern group (where the rate match pattern group corresponds to higher layer parameters: rateMatchPatternGroup1 and rateMatchPatternGroup2) for the terminal device. The rate matching pattern group includes one or more rate matching patterns (where the rate match pattern corresponds to a higher layer parameter: RateMatch-Pattern). Each rate matching pattern indicates a group of resources that use one resource block as a granularity in frequency domain and use one symbol as a granularity in time domain, to perform rate matching. After configuring the time-frequency resource, the network device delivers the time-frequency resource to the terminal device by using RRC.

It should be noted that the rate matching pattern group configured by the network device includes a list of resource blocks (resource block, RB) and symbol-level resource set indexes. The list of resource blocks and symbol-level resource set indexes forms a combination of resource sets that are dynamically indicated as unavailable for PDSCH transmission when a related bit of a rate matching indication field in a DCI format 1_1 (that is, the DCI used for scheduling the PDSCH) used for scheduling the PDSCH is equal to 1.

It should be noted that a part of rate matching patterns configured by the network device may not be included in any rate matching pattern group. These rate matching patterns are definitely used for rate matching. These rate matching patterns may not be indicated in the DCI. These rate matching patterns also include resource elements related to a combination of RBs and symbol-level resource sets.

The DCI that is sent by the network device and that is used for scheduling the PDSCH may include a rate matching indication (Rate matching indicator) field. The rate matching indication field indicates whether the rate matching pattern group is available.

A quantity of bits occupied by the rate matching indication field is related to a quantity of rate matching pattern groups. For example, when there are two rate matching pattern groups, the rate matching indication field occupies two bits; when there is one rate matching pattern group, the rate matching indication field occupies one bit; or when there is no rate matching pattern group, the rate matching indication field occupies zero bit.

The foregoing bits are in a one-to-one correspondence with the rate matching pattern group. The network device indicates, based on a value of the bit, whether a rate matching pattern group corresponding to the bit is available (activated).

For example, if a value of a bit that is in the DCI and that indicates a rate matching pattern group 1 is 1, the rate matching pattern group 1 is available; or if a value of a bit that is in the DCI and that indicates a rate matching pattern group 1 is 0, the rate matching pattern group 1 is unavailable.

In an implementation, when there are two rate matching pattern groups, a bit that occupies a most significant bit (most significant bit, MSB) in the rate matching indication field indicates a rate matching pattern group 1. A bit that occupies a least significant bit (least significant bit, LSB) indicates a rate matching pattern group 2.

In addition, the network device configures an aperiodic zero power channel state information reference signal resource set (ZP CSI-RS resource set) list (corresponding to a higher layer parameter aperiodic-ZP-CSI-RS-Resource-SetsToAddModList) for the terminal device in the PDSCH configuration. Each aperiodic ZP CSI-RS resource set includes one or more zero power CSI-RS resources ZP CSI-RS resources (corresponding to a higher layer parameter ZP-CSI-RS-Resource). When the corresponding aperiodic zero power channel state information reference signal resource set is triggered, one or more resource elements (resource element, RE) indicated by the aperiodic-ZP-CSI-RS-Resource-SetsToAddModList are declared as unavailable for the PDSCH, and are used for rate matching. After configuring a time-frequency resource indicated by the ZP CSI-RS resource set, the network device delivers the time-frequency resource to the terminal device by using RRC.

The DCI that is sent by the network device and that is used for scheduling the PDSCH may include a zero power channel state information reference signal trigger (ZP CSI-RS trigger) field. The zero power channel state information reference signal trigger field indicates whether the AP ZP CSI-RS resource set is triggered.

A bit length of the ZP CSI-RS trigger field in the DCI depends on a quantity of configured aperiodic ZP CSI-RS resource sets (2 bits at most). By indicating an indication of an aperiodic ZP CSI-RS resource set ID (ZP-CSI-RS-ResourceSetIds), a non-zero bit of each ZP CSI-RS trigger in the DCI format 1_1 triggers an aperiodic ZP CSI-RS resource set in an aperiodic-ZP-CSI-RS-ResourceSetsToAddModList list.

For example, a DCI bit "01" triggers a resource set of ZP-CSI-RS-ResourceSetIds=1, a DCI bit "10" triggers a resource set of ZP-CSI-RS-ResourceSetIds=2, and a DCI bit "11" triggers a resource set of ZP-CSI-RS-Resource-SetIds=3. Trigger of a DCI bit "00" is reserved as not triggering an aperiodic ZP CSI-RS.

4. Time-domain mapping manner of a PDSCH

In an NR system, a PDSCH has two mapping types: a mapping type A (mapping type A) and a mapping type B (mapping type A). If an $i^{th}$ (where i is an integer greater than or equal to 0 and less than or equal to 12) symbol in one slot (slot) is denoted as a symbol i, start symbols (denoted as a symbol S) and quantities L of consecutive symbols of two types of PDSCHs are different, and positions of DMRSes are also different. Table 1 shows differences of S and L between the two mapping types.

**Table 1**

| Mapping type of a PDSCH | NCP | | | ECP | | |
|---|---|---|---|---|---|---|
| | S | L | S+L | S | L | S+L |
| Type A | {0, 1, 2, 3} (note 1) | {3, ..., 14} | {3, ..., 14} | {0, 1, 2, 3} (note 1) | {3, ..., 12} | {3, ..., 12} |
| Type B | {0, ..., 12} | {2, 4, 7} | {2, ..., 14} | {0, ..., 10} | {2, 4, 6} | {2, ..., 12} |
| Note (note): S=3 is applicable only if dmrs-typeA-position=3 (S=3 is applicable only if dmrs-TypeA-Position=3) | | | | | | |

It can be learned from Table 1 that, when a normal cyclic prefix (normal cyclic prefix, NCP) is used (an extended cyclic prefix (expanded cyclic prefix, ECP) is similar):
First, a start symbol of the type A may be first four symbols, that is, symbols of S={0, 1, 2, 3}, and a start symbol of the type B may be first 13 symbols, that is, symbols of S={0, ..., 12}.

Second, a quantity of consecutive symbols of the type A may be {3, ..., 14}, and a quantity of consecutive symbols of the type B may be {2, 4, 7}.

The mapping type A is used as an example. It is assumed that the start symbol is a symbol 2 and the quantity of consecutive symbols is 11, the PDSCH may be mapped to symbols {2, 3, 4, 5, 6, 7, 8, 9, 10, 11, 12}.

Alternatively, the mapping type B is used as an example. It is assumed that the start symbol is a symbol 4 and the quantity of consecutive symbols is 2, the PDSCH may be mapped to symbols {4, 5}.

Alternatively, the mapping type B is used as an example. It is assumed that the start symbol is a symbol 8, and the quantity of consecutive symbols is 4, the PDSCH may be mapped to symbols {8, 9, 10, 11}.

In addition, it should be noted that, for the mapping type A, a position of a symbol of a first DMRS may be determined based on a higher layer parameter dmrs-TypeA-Position, and may be in a symbol 2 or a symbol 3. For the mapping type B, the symbol of the first DMRS is on the first symbol of the PDSCH. In addition, for scheduling of the two mapping types, an additional DMRS symbol may be scheduled. Descriptions are uniformly provided herein, and details are not described below again.

In the conventional technology, the multi-DCI transmission mode of the multi-TRP transmission technology (denoted as multi-TRP multi-DCI transmission) and rate matching are combined. When a first TRP sends first DCI to a terminal device for scheduling a first PDSCH, and a second TRP sends second DCI to the terminal device for scheduling a second PDSCH, a case in which the first DCI indicates whether the rate matching pattern group is activated may be different from a case in which the second DCI indicates whether the rate matching pattern group is activated. As a result, there are both strong interference and weak interference between the first PDSCH and the second PDSCH. In this case, the terminal device needs to separately process interference in two different cases, and the terminal device needs to process the interference in these different cases by using different manners. In this case, the terminal device needs to separately receive the first PDSCH and the second PDSCH in space domain. Consequently, complexity of processing the PDSCH by the terminal device increases.

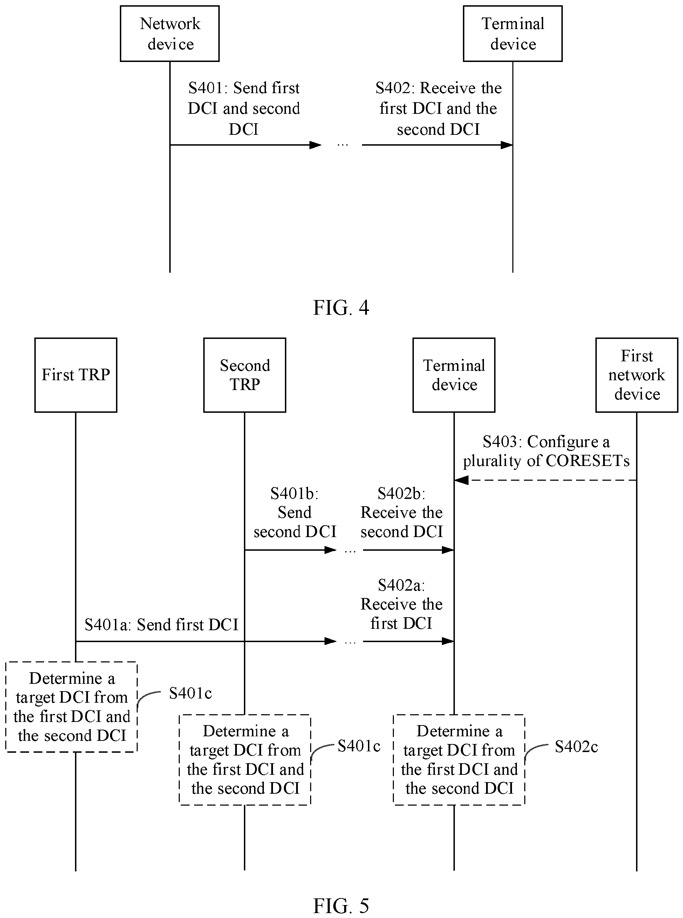

To resolve the technical problem, an embodiment of this application provides a PDSCH transmission method. As shown in FIG. 4, the method includes the following steps.

S401: A network device sends first DCI on a first CORESET, and sends second DCI on a second CORESET.

The first DCI is used for scheduling a first PDSCH. The second DCI is used for scheduling a second PDSCH. The first PDSCH and the second PDSCH have overlapping time-frequency resources. It should be noted that, that the first PDSCH and the second PDSCH have overlapping time-frequency resources means that the first PDSCH and the second PDSCH partially or completely overlap in time domain and frequency domain.

At least one of the first DCI and the second DCI has first indication information (the first indication information includes at least one of a rate matching indication (Rate matching indicator) field and a zero power channel state information-reference signal trigger (ZP CSI-RS trigger) field). Configuration information of the first CORESET includes first identification information. Configuration information of the second CORESET includes second identification information. The first identification information and the second identification information have different values.

The first indication information included in one piece of DCI that is in the first DCI and the second DCI and that has the first indication information indicates whether one or more time-frequency resource groups in the first PDSCH and the second PDSCH are available (or it may be understood that the first indication information indicates whether a terminal device can obtain one or more time-frequency resource groups when receiving the first PDSCH and the second PDSCH). The time-frequency resource group includes one or more resource sets, and the time-frequency resource group is configured by using RRC signaling. In this embodiment of this application, for ease of description, the foregoing DCI indicating whether the one or more time-frequency resource groups in the first PDSCH and the second PDSCH are available is denoted as target DCI. The target DCI is one piece of DCI that is in the first DCI and the second DCI and that has the first indication information.

S402: The terminal device receives the first DCI and the second DCI that are from the network device.

The first DCI is associated with the first CORESET, and the second DCI is associated with the second CORESET.

That the first DCI is associated with the first CORESET may also be understood as that the network device sends the first DCI on the first CORESET. That the second DCI is associated with the second CORESET may also be understood as that the network device sends the second DCI on the second CORESET.

It should be noted that the target DCI may be DCI determined by the network device from the first DCI and the second DCI. After the network device determines the target DCI, the network device marks the DCI as the target DCI by using an identifier; or indicates, by using additional first indication information, that the DCI is the target DCI.

Alternatively, the target DCI may be target DCI determined by the terminal device based on the first DCI and the second DCI after the terminal device receives the first DCI and the second DCI.

Alternatively, the target DCI may be DCI specified in a protocol. When generating the first DCI and the second DCI, the network device determines the target DCI from the first DCI and the second DCI based on the protocol. Alternatively, after receiving the first DCI and the second DCI, the terminal device determines the target DCI from the first DCI and the second DCI based on the protocol.

Based on the foregoing technical solution, in multi-TRP multi-DCI transmission, the first indication information in the target DCI in the first DCI and the second DCI that are sent by the network device indicate whether the one or more time-frequency resource groups in the first PDSCH and the second PDSCH are available.

If the one or more time-frequency resource groups in the first PDSCH and the second PDSCH are available, neither the first PDSCH nor the second PDSCH performs rate matching on the one or more time-frequency resource groups. In other words, both the first PDSCH and the second PDSCH may be transmitted on the one or more time-frequency resource groups. In this way, in the overlapping time-frequency resources between the first PDSCH and the second PDSCH, there is always strong interference between the first PDSCH and the second PDSCH.

If the one or more time-frequency resource groups in the first PDSCH and the second PDSCH are not available, both the first PDSCH and the second PDSCH perform rate matching on the one or more time-frequency resource groups. In other words, neither the first PDSCH nor the second PDSCH is transmitted on the one or more time-frequency resource groups. In this way, neither the first PDSCH nor the second PDSCH is transmitted on the one or more time-frequency resource groups, and therefore the first PDSCH and the second PDSCH does not interfere with each other. On an overlapping time-frequency resource other than the one or more time-frequency resource groups, there is always strong interference between the first PDSCH and the second PDSCH.

In this way, in this embodiment of this application, the first indication information in the target DCI indicates whether the one or more time-frequency resource groups in the first PDSCH and the second PDSCH are available. In this way, there is only strong interference and no weak interference between the first PDSCH and the second PDSCH on the overlapping time-frequency resources. Based on this, the terminal device can descramble the PDSCH only by using a strong-interference descrambling manner. In this way, the terminal device can receive both of the first PDSCH and the second PDSCH in space domain. This reduces complexity of processing the PDSCH by the terminal device.

In a possible implementation, with reference to FIG. 4, as shown in FIG. 5, before S401, the PDSCH transmission method provided in this embodiment of this application further includes S403.

S403: A first network device configures a plurality of CORESETs for the terminal device.

The first network device may be a base station, and the plurality of CORESETs include the first CORESET and the second CORESET.

In the CORESETs configured by the network device, configuration information corresponding to each CORESET may include or not include a CORESET pool index (CORESETPoolIndex). When included, values of CORESETPoolIndexes included in configuration information of different CORESETs may be either a CORESETPoolIndex_1 or a CORESETPoolIndex_2.

The CORESETPoolIndex_1 and the CORESETPoolIndex_2 may be identified by using specific values. For example, the CORESETPoolIndex_1 may be 0, and the CORESETPoolIndex_2 may be 1.

The network device sends corresponding DCI on different CORESETs. For example, with reference to the foregoing embodiment, the network device sends the first DCI on the first CORESET, and sends the second DCI on the second CORESET.

In this embodiment of this application, values of CORESETPoolIndexes corresponding to the first CORESET and the second CORESET are different.

For example, the configuration information of the first CORESET includes a CORESETPoolIndex whose value is the CORESETPoolIndex_1, and the configuration information of the second CORESET includes a CORESETPoolIndex whose value is the CORESETPoolIndex_2. In other words, the first CORESET corresponds to the CORESETPoolIndex_1, and the second CORESET corresponds to the CORESETPoolIndex_2.

Alternatively, the configuration information of the first CORESET includes a CORESETPoolIndex whose value is the CORESETPoolIndex_2, and the configuration information of the second CORESET includes a CORESETPoolIndex whose value is the CORESETPoolIndex_1. In other words, the first CORESET corresponds to the CORESETPoolIndex_2, and the second CORESET corresponds to the CORESETPoolIndex_1.

The following uses an example in which the first CORESET corresponds to the CORESETPoolIndex_1 and the second CORESET corresponds to the CORESETPoolIndex_2 for description.

Based on the foregoing technical solution, the network device configures the plurality of CORESETs for the terminal device, so that the terminal device can send different DCI to the terminal device on different CORESETs.

In a possible implementation of this embodiment of this application, a network side can send two pieces of DCI (including the first DCI and the second DCI) to the terminal device in a multi-TRP transmission mode. In this case, the network device described in S401 may include two different TRPs.

In this case, based on FIG. 4, as shown in FIG. 5, the PDSCH transmission method provided in this embodiment of this application is further described by using an example in which the network device includes a first TRP and a second TRP. As shown in FIG. 5, S401 may be specifically implemented by using S401a, S401b, and S401c, and S402 may be implemented by using S402a, S402b, and S402c.

S401a: The first TRP sends the first DCI to the terminal device on the first CORESET.

In a possible implementation, after the first network device configures the plurality of CORESETs for the terminal device, the first network device determines the first TRP and the second TRP that provide transmission data for the terminal device.

The first network device delivers configuration information of the plurality of CORESETs to the terminal device by using an RRC message. Configuration information of one or more of the plurality of CORESETs includes CORESETPoolIndexes, and a CORESET whose value is CORESETPoolIndex 1 is the first CORESET. The configuration information of the one or more CORESETs includes CORESETPoolIndexes, and a CORESET whose value is CORESETPoolIndex_2 is the second CORESET. The first TRP sends the first DCI to the terminal device on the first CORESET.

S401b: The second TRP sends the second DCI to the terminal device on the second CORESET.

For a specific implementation of S401b, refer to S401a. Details are not described herein again.

S401c: The first TRP and the second TRP determine the target DCI from the first DCI and the second DCI.

The target DCI is one piece of DCI that is in the first DCI and the second DCI and that has the first indication information. The first indication information in the target DCI indicates whether the one or more time-frequency resource groups in the first PDSCH and the second PDSCH are available.

In an implementation of S401c, that the first TRP and the second TRP determine the target DCI from the first DCI and the second DCI includes the following three scenarios: Scenario 1: One piece of DCI in the first DCI and the second DCI has the first indication information; Scenario 2: The first DCI and the second DCI have the same first indication information; Scenario 3: The network device determines that the first DCI and the second DCI have different first indication information. Descriptions are provided below separately.

Scenario 1: One piece of DCI in the first DCI and the second DCI has first indication information.

In this scenario, the first TRP and the second TRP determine that the target DCI is the DCI having the first indication information.

The DCI having the first indication information is DCI that is in the first DCI and the second DCI and that meets a preset condition.

In a possible implementation, in a process in which the first TRP and the second TRP generate the DCI, the first TRP and the second TRP determine whether the DCI generated by the first TRP and the second TRP meets a preset condition. If the preset condition is met, the TRP configures the first indication information in the DCI generated by the TRP. If the preset condition is not met, the TRP does not configure the first indication information in the DCI generated by the TRP.

For example, the first TRP determines that first DCI generated by the first TRP meets the preset condition, and the second TRP determines that second DCI generated by the second TRP does not meet the preset condition. In this case, the first TRP configures the first indication information in the first DCI. The second TRP does not configure the first indication information in the second DCI. In this case, the first TRP and the second TRP determine the first DCI as the target DCI.

Scenario 2: The first DCI and the second DCI have the same first indication information.

In this scenario, the first TRP and the second TRP determine that the target DCI is either the first DCI or the second DCI.

It should be noted that, in this scenario, the first TRP and the second TRP negotiate the first indication information configured for the first DCI and the second DCI, so that the configured first DCI and the second DCI have the same first indication information. Then, the first TRP and the second TRP generate first DCI and second DCI based on a negotiation result, and configure same first indication information in the first DCI and the second DCI.

Scenario 3: The network device determines that the first DCI and the second DCI have different first indication information.

In this scenario, the first TRP and the second TRP determine that the target DCI is DCI that is in the first DCI and the second DCI and that meets a preset condition.

It should be noted that, in this scenario, the first TRP and the second TRP each generate corresponding DCI. Then, the first TRP and the second TRP determine whether the first indication information in the first DCI is the same as that in the second DCI. If the first indication information in the first DCI is the same as that in the second DCI, the first TRP and the second TRP determine the target DCI by using the method described in the scenario 2. If the first indication information in the first DCI is different from that in the second DCI, the first TRP and the second TRP determine DCI that is in the first DCI and the second DCI and that meets the preset condition as the target DCI.

It should be noted that the preset conditions used in the scenario 1 and the scenario 3 may be a same preset condition. Correspondingly, the DCI that meets the preset condition may be any one of the following:

1. DCI associated with a CORESET whose CORESETPoolIndex is 0; 2. DCI associated with a CORESET whose CORESETPoolIndex is 1; 3. DCI associated with a CORESET with a largest CORESET-ID; 4. DCI associated with a CORESET with a smallest CORESET-ID; 5. DCI associated with a CORESET whose start symbol position is ranked first; 6. DCI associated with a CORESET whose start symbol position is same and whose end symbol position is ranked first; 7. DCI associated with a CORESET that is first blindly detected by the terminal device; 8. DCI associated with a CORESET that is last blindly detected by the terminal device; and 9. DCI last received by the terminal device.

It should be noted that the foregoing DCI that meets the preset condition is merely an example for description, and does not constitute a limitation on the DCI that meets the preset condition and that is described in this embodiment of this application.

S402a: The terminal device receives the first DCI on the first CORESET.

In a possible implementation, the terminal device blindly detects a PDCCH on a time-frequency resource indicated by the first CORESET, to obtain the first DCI. This process is specifically as follows:

The terminal device performs, based on one or more search spaces, blind detection on the time-frequency resource indicated by the first CORESET, to obtain a PDCCH sent by the first TRP on the time-frequency resource. The terminal device attempts to receive the DCI on the PDCCH. The DCI transmitted on the PDCCH includes a preset parity bit. After receiving the DCI on the PDCCH, the terminal device parses the DCI to obtain the preset parity bit in the DCI. The terminal device compares the preset parity bit obtained by parsing the DCI with a parity bit that is delivered by the first network device and that is used when the DCI is generated. If the two parity bits are consistent, it indicates that the DCI is correctly received. If the two parity bits are inconsistent, it indicates that the DCI is not correctly received, and the terminal device discards the DCI that is not correctly received.

S402b: The terminal device receives the second DCI on the second CORESET.

For a specific implementation of S402b, refer to S402a. Details are not described herein again.

After receiving the first DCI and the second DCI, the terminal device may determine, based on the configuration information CORESETPoolIndex (the CORESETPoolIndex_1) of the first CORSET in which the first DCI is located and the configuration information CORESETPoolIndex (the CORESETPoolIndex_2) of the second CORESET in which the second DCI is located, that the first DCI and the second DCI are from different TRPs.

S402c: The terminal device determines the target DCI from the first DCI and the second DCI.

The target DCI is one piece of DCI that is in the first DCI and the second DCI and that has the first indication information. The first indication information in the target DCI indicates whether the one or more time-frequency resource groups in the first PDSCH and the second PDSCH are available.

It should be noted that whether the one or more time-frequency resource groups in the first PDSCH and the second PDSCH are available means whether the terminal device receives the first PDSCH and the second PDSCH on the one or more time-frequency resource groups.

If the first indication information in the DCI indicates that the terminal device can obtain the one or more time-frequency resource groups when receiving the first PDSCH and the second PDSCH, the terminal device receives the first PDSCH and the second PDSCH on the one or more time-frequency resource groups.

If the first indication information in the DCI indicates that the terminal device cannot obtain the one or more time-frequency resource groups when receiving the first PDSCH and the second PDSCH, the terminal device does not receive the first PDSCH and the second PDSCH on the one or more time-frequency resource groups.

In a possible implementation of S402c, because at least one of the first DCI and the second DCI has the first indication information, that the first DCI and the second DCI have the first indication information includes the following four cases: Case 1: Only the first DCI includes the first indication information. Case 2: Only the second DCI includes the first indication information. Case 3: The first DCI and the second DCI each include the first indication information, and the first indication information in the first DCI is the same as that in the second DCI. Case 4: The first DCI and the second DCI each include the first indication information, and the first indication information in the first DCI is different from that in the second DCI. The following separately describes the four cases in detail.

Case 1: Only the first DCI includes the first indication information.

In this case, the terminal device determines the first DCI as the target DCI. The terminal device determines, based on the first indication information in the first DCI, whether the one or more time-frequency resource groups in the first PDSCH and the second PDSCH are available.

If the first indication information in the first DCI indicates that the terminal device may obtain the one or more time-frequency resource groups when receiving the first PDSCH and the second PDSCH, the terminal device obtains the one or more time-frequency resource groups when receiving the first PDSCH and the second PDSCH.

If the first indication information in the first DCI indicates that the terminal device cannot obtain the one or more time-frequency resource groups when receiving the first PDSCH and the second PDSCH, the terminal device does not obtain the one or more time-frequency resource groups when receiving the first PDSCH and the second PDSCH.

Case 2: Only the second DCI includes the first indication information.

In this case, the terminal device determines the second DCI as the target DCI.

For a specific implementation of case 2, refer to case 1. Details are not described herein again.

Case 3: The first DCI and the second DCI each include the first indication information, and the first indication information in the first DCI is the same as that in the second DCI.

In this case, the terminal device may determine, based on the first indication information in either the first DCI or the second DCI, whether the one or more time-frequency resource groups in the first PDSCH and the second PDSCH are available.

Case 4: The first DCI and the second DCI each include the first indication information, and the first indication information in the first DCI is different from that in the second DCI.

In this case, the terminal device determines DCI that is in the first DCI and the second DCI and that meets the preset condition as the target DCI. The DCI that meets the preset condition may be any one of the following: 1. DCI associated with a CORESET whose CORESETPoolIndex is 0; 2. DCI associated with a CORESET whose CORESETPoolIndex is 1; 3. DCI associated with a CORESET with a largest CORESET-ID; 4. DCI associated with a CORESET with a smallest CORESET-ID; 5. DCI associated with a CORESET whose start symbol position is ranked first; 6. DCI associated with a CORESET whose start symbol position is same and whose end symbol position is ranked first; 7. DCI associated with a CORESET that is first blindly detected by the terminal device; 8. DCI associated with a CORESET that is last blindly detected by the terminal device; and 9. DCI last received by the terminal device.

It should be noted that the foregoing DCI that meets the preset condition is merely an example for description, and does not constitute a limitation on the DCI that meets the preset condition and that is described in this embodiment of this application.

Based on the foregoing technical solution, in a multi-TRP multi-DCI transmission scenario, the first TRP and the second TRP are respectively associated with the first CORESET and the second CORESET, and the first DCI and the second DCI are respectively transmitted on different CORESETs. The terminal device and/or the network device may determine the target DCI from the first DCI and the second DCI based on a preset rule, to determine whether the first PDSCH and the second PDSCH are transmitted on the one or more time-frequency resource groups configured as rate matching. Based on this, the technical solutions provided in embodiments of this application are applicable to a transmission mode of multi-TRP and multi-DCI transmission.

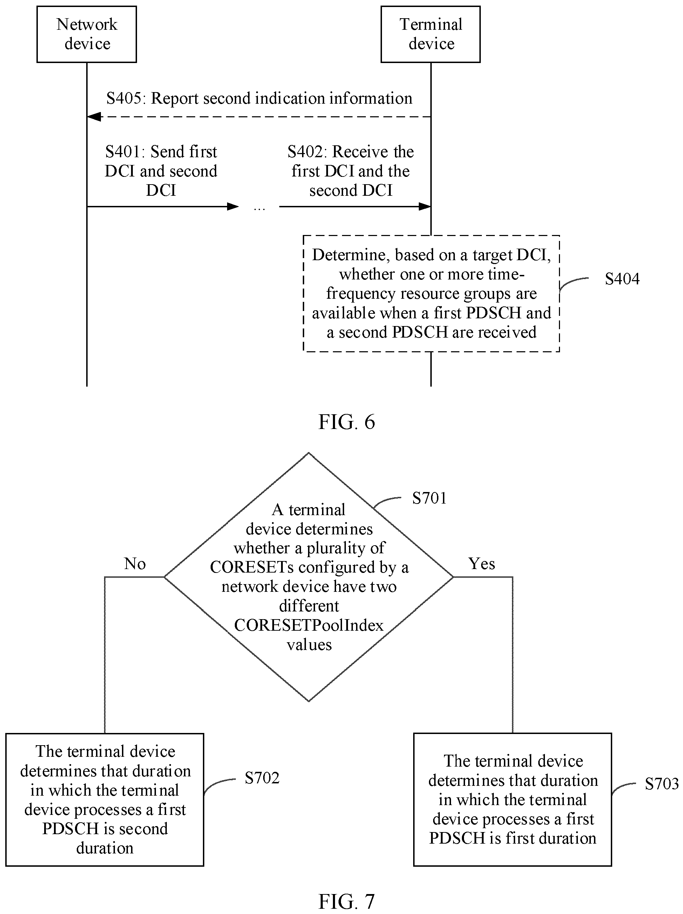

In an implementation of this embodiment of this application, with reference to FIG. 4, as shown in FIG. 6, after S402, the PDSCH transmission method provided in this embodiment of this application further includes S404.

S404: The terminal device determines, based on the target DCI, whether the one or more time-frequency resource groups are available when receiving the first PDSCH and the second PDSCH.

It should be noted that the one or more time-frequency resource groups are preconfigured time-frequency resources that can be used for rate matching.

The network device may indicate, by using the DCI, that the terminal device can obtain the one or more time-frequency resource groups when receiving the first PDSCH and the second PDSCH. It indicates that the one or more time-frequency resource groups can be used for transmitting the first PDSCH and the second PDSCH. In other words, the one or more time-frequency resource groups are not used for rate matching.

The network device may indicate, by using the DCI, that the terminal device cannot obtain the one or more time-frequency resource groups when receiving the first PDSCH and the second PDSCH. It indicates that the one or more time-frequency resource groups cannot be used for transmitting the first PDSCH and the second PDSCH. In other words, the one or more time-frequency resource groups are used for rate matching.

Correspondingly, the terminal device determines, based on the first indication information in the DCI, whether to receive the first PDSCH and the second PDSCH on the one or more time-frequency resource groups.

If the target DCI indicates that the one or more time-frequency resource groups can be obtained when the first PDSCH and the second PDSCH are received, the terminal device receives the first PDSCH and the second PDSCH on the one or more time-frequency resource groups.

If the target DCI indicates that the one or more time-frequency resource groups cannot be obtained when the first PDSCH and the second PDSCH are received, the terminal device does not receive the first PDSCH and the second PDSCH on the one or more time-frequency resource groups.

Based on the foregoing technical solution, when receiving the first PDSCH and the second PDSCH, the terminal device receives or does not receive both the first PDSCH and the second PDSCH on the one or more time-frequency resource groups. This can prevent the first PDSCH and the second PDSCH from generating weak interference on the one or more time-frequency resource groups.

In an implementation of this embodiment of this application, as shown in FIG. 6, before S401 and S402, the PDSCH transmission method provided in this embodiment of this application further includes S405.

S405: The terminal device reports second indication information to the network device.

The second indication information indicates whether the terminal device supports all the following three conditions. Condition 1: N pieces of DCI are received, where $N \geq 2$, and an CORESETPoolIndex in N CORESETs separately associated with the N pieces of DCI have two different values; Condition 2: Values of first indication information included in the N pieces of DCI are different; Condition 3: N PDSCHs scheduled by the N pieces of DCI have overlapping time-frequency resources.

That the N PDSCHs have the overlapping time-frequency resources means that the N PDSCHs partially or completely overlap in time domain and frequency domain.

If the second indication information indicates that the terminal device cannot support the foregoing three conditions at the same time, the terminal device and the network device may indicate, by using the DCI with reference to the manner described in the foregoing embodiment, whether the first PDSCH and the second PDSCH are available in a rate matching pattern group.

If the second indication information indicates that the terminal device can support the foregoing three conditions at the same time, the terminal device and the network device may indicate, by using the DCI with reference to the manner in the conventional technology, whether the first PDSCH and the second PDSCH are available in the rate matching pattern group.

Based on the foregoing technical solution, the network device may flexibly select a DCI indication manner for the terminal device based on whether the terminal device supports the foregoing three conditions at the same time. This improves an applicable scenario of the solution and configuration flexibility of the network device.

In a current communication manner, after the terminal device blindly detects the first DCI and the second DCI, the terminal device determines a time-frequency resource in the first PDSCH based on the first DCI. The terminal device decodes (also referred to as processes) the first PDSCH at a time-frequency resource location that is of the first PDSCH and that is indicated by the first DCI. The terminal device determines a time-frequency resource in the second PDSCH based on the second DCI. The terminal device decodes the second PDSCH at a time-frequency resource location that is of the second PDSCH and that is indicated by the second DCI.

In this process, the terminal device needs to reserve a specific time to decode the PDSCH, to obtain data information in the PDSCH. After the terminal device decodes the PDSCH, the terminal device may send hybrid automatic repeat request (hybrid automatic repeat request, HARQ) information to the network device on a physical uplink control channel (physical downlink control channel, PUCCH), to determine whether the PDSCH is correctly received. If the PDSCH is correctly received, the terminal device sends HARQ-acknowledgment (acknowledgement, ACK) information to the network device. If the PDSCH is not correctly received, the terminal device sends HARQ-negative acknowledgment (negative acknowledgement, NACK) information to the network device. After the network device receives the HARQ-NACK information of the terminal device, the network device resends the PDSCH to the terminal device.

In the conventional technology, it is specified that a time $N_1$ for decoding a PDSCH by the terminal device is related to a value $\mu$.

The value $\mu$ corresponds to one of ($\mu_{PDCCH}$, $\mu_{PDSCH}$, $\mu_{UL}$) that maximizes the value $T_{proc,1}$. $\mu_{PDCCH}$ corresponds to a subcarrier spacing of a PDCCH for scheduling the PDSCH, $\mu_{PDSCH}$ corresponds to a subcarrier spacing of a scheduled PDSCH, and $\mu_{UL}$ corresponds to a subcarrier spacing of an uplink channel for transmitting a HARQ-ACK. For a specific understanding of $T_{proc,1}$, refer to the following formula 1.

A current PDSCH processing capability of the terminal device usually includes a PDSCH processing capability 1 and a PDSCH processing capability 2.

Table 2 shows possible values of $\mu$ in the PDSCH processing capability 1, and a correspondence between the value $\mu$ and the time $N_1$.

**Table 2**

| $\mu$ | Time $N_1$ at which the terminal device decodes the PDSCH (PDSCH decoding time $N_1$ [symbols]) | |
| --- | --- | --- |
| | dmrs-AdditionalPosition=pos0 in DMRS-DownlinkConfig in both of dmrs-DownlinkForPDSCH-MappingTypeA, dmrs-DownlinkForPDSCH-MappingTypeB | dmrs-AdditionalPosition$\neq$pos0 in DMRS-DownlinkConfig in either of dmrs-DownlinkForPDSCH-MappingTypeA, dmrs-DownlinkForPDSCH-MappingTypeB or if the higher layer parameter is not configured |
| 0 | 8 | $N_{1,0}$ |
| 1 | 10 | 13 |
| 2 | 17 | 20 |
| 3 | 20 | 24 |

dmrs-AdditionalPosition=pos (position) 0 indicates that an additional position of a DMRS is located on pos0. $N_{1,0}$ is determined based on an additional position of the DMRS of the PDSCH. When the additional position of the DMRS is equal to 12, a value of $N_{1,0}$ is 14. Otherwise, a value of $N_{1,0}$ is 13.

DMRS-DownlinkConfig in both of dmrs-DownlinkForPDSCH-MappingTypeA, dmrs-DownlinkForPDSCH-MappingTypeB indicates that a downlink configuration parameter of the DMRS is configured in both a mapping type A of a downlink PDSCH and a mapping type B of the downlink PDSCH.

dmrs-AdditionalPosition^posO indicates that an additional position of the DMRS is not on pos 0. DMRS-DownlinkConfig in either of dmrs-DownlinkForPDSCH-MappingTypeA, dmrs-DownlinkForPDSCH-MappingTypeB, or if the higher layer parameter is not configured indicates that a downlink configuration parameter of the DMRS is configured in either the mapping type A of the downlink PDSCH or the mapping type B of the downlink PDSCH, or is not configured in a higher layer protocol.

Table 3 shows possible values of $\mu$ in the PDSCH processing capability 2, and a correspondence between the value $\mu$ and the time $N_1$.

**Table 3**

| $\mu$ | Time $N_1$ at which the terminal device decodes the PDSCH (PDSCH decoding time $N_1$ [symbols]) |
| --- | --- |
| | dmrs-AdditionalPosition=posO in DMRS-DownlinkConfig in both of dmrs-DownlinkForPDSCH-MappingTypeA, dmrs-DownlinkForPDSCH-MappingTypeB |
| 0 | 3 |
| 1 | 4.5 |
| 2 | 9 for frequency range 1 |

9 for frequency range 1 indicates that when a frequency range is 1, the value of $N_1$ is 9.

According to the current protocol, a start time of a first uplink symbol of the PUCCH carrying the HARQ-ACK information cannot be earlier than L1. L1 is defined as a next uplink symbol, and a cyclic prefix (cyclic prefix, CP) of L1 starts later than the time $T_{proc,1}$ after an end of a last symbol of the PDSCH carrying a transport block (Transport block, TB). $T_{proc,1}$ is determined according to the following formula 1:

$$T_{proc,1} = (N_1 + d_{1,1})(2048 + 144) \cdot \kappa 2^{-\mu} \cdot T_C \quad \text{Formula 1}$$

$d_{1,1}$ is determined based on a position of the last symbol of the PDSCH in a slot, and details are as follows:

In the mapping type A of the PDSCH, if i < 7, $d_{1,1}$ = 7 - i; otherwise, $d_{1,1}$ = 0. i represents the last symbol of the PDSCH, and is an ith symbol in the slot.

In the mapping type B of the PDSCH, a value of $d_{1,1}$ is related to a PDSCH processing capability of the terminal device. The following separately describes values of the $d_{1,1}$ in the PDSCH processing capability 1 and the PDSCH processing capability 2 of the terminal device.

1. PDSCH processing capability 1

If a quantity of allocated PDSCH symbols is L ≥ 7, $d_{1,1}$ = 0.

If a quantity of allocated PDSCH symbols is L ≥ 4 and L ≤ 6, $d_{1,1}$ = 7 - L.

If a quantity of allocated PDSCH symbols is L = 3, $d_{1,1}$ = 3 + min (d, 1), where d is a quantity of overlapping symbols between a PDCCH used for scheduling a PDSCH and the PDSCH.

If a quantity of allocated PDSCH symbols is L = 2, $d_{1,1}$ = 3 + d.

2. PDSCH processing capability 2

If a quantity of allocated PDSCH symbols is L ≥ 7, $d_{1,1}$ = 0.

If a quantity of allocated PDSCH symbols is L ≥ 3 and L ≤ 6, $d_{1,1}$ = d.

If a quantity of allocated PDSCH symbols is 2 and the following condition a is met, $d_{1,1}$ = 3.

The condition a is that a PDCCH used for scheduling a PDSCH is in a CORESET of a 3-symbol, and a start symbol of the CORESET is the same as that of the PDSCH.

If a quantity of allocated PDSCH symbols is 2 and the condition a is not met, $d_{1,1}$ = d.

$\kappa = T_S / T_C$, where both $T_C$ and $T_S$ are time units; $T_C$ is a basic time unit defined in NR. $T_C$ = 1 / ($\Delta f_{max} \times N_f$), where $\Delta f_{max}$ is a subcarrier spacing, a value of $\Delta f_{max}$ is $\Delta f_{max}$ = 480 × 10$^3$ HZ, $N_f$ is a quantity of sampling points, and a value of $N_f$ is $N_f$ = 4096. $T_S$ is a basic time unit defined in LTE. $T_S$ = 1 / ($\Delta f_{ref} \times N_{f,ref}$), where $\Delta f_{max}$ is a subcarrier spacing, a value of $\Delta f_{max}$ is $\Delta f_{max}$ = 480 × 10$^3$ HZ, $N_f$ is a quantity of sampling points, and a value of $N_f$ is $N_{f,ref}$ = 2048.

In other words, the start time of the first uplink symbol of the PUCCH is later than the time $T_{proc,1}$ after the end of the last symbol of the PDSCH carrying the TB.

In multi-TRP multi-DCI transmission, because there is interference between the first PDSCH and the second PDSCH, the terminal device needs to demodulate the first PDSCH and the second PDSCH based on complete channel information and resource allocation statuses on DMRS ports indicated by different DCI after completing blind detection on the first CORESET corresponding to the first TRP and the second CORESET corresponding to the second TRP.

In this case, if the terminal device first completes blind detection on the first CORESET but does not complete blind detection on the second CORESET, the terminal device needs to wait for a period of time to complete blind detection on the second CORESET, and demodulates the first PDSCH and the second PDSCH.

However, in the conventional technology, a time reserved by the terminal device for processing the PDSCH does not include a waiting time for completing blind detection on CORESETs of all TRPs. As a result, a waiting time for the terminal device to complete blind detection occupies the time for processing the PDSCH by the terminal device, and the time for processing the PDSCH by the terminal device is shortened. In this case, complexity of the terminal device needs to be increased, so that a requirement for processing the PDSCH by the terminal device can be met.

In a possible implementation, a time variable Δ may be introduced into a time $T_{proc,1}$ for processing the PDSCH by the terminal device, to increase duration for processing the PDSCH by the terminal device. After the time variable Δ is introduced, a time for processing the PDSCH by the terminal device is $T_{proc,1}^{mult}$.

$$T_{proc,1}^{mult} = (N_1 + d_{1,1} + \Delta)(2048 + 144) \cdot \kappa 2^{-\mu} \cdot T_c$$

A value of ∆ is determined based on a mapping type of the PDSCH, PDSCH on duration, an overlapping degree between the PDSCH and another PDSCH, and an overlapping degree between the PDSCH and a PDCCH to which DCI for scheduling the PDSCH belongs in a scenario of the mapping type B.

In this implementation, the terminal device introduces the time variable ∆ into the time for processing the PDSCH. However, the time variable ∆ is determined by the mapping type of the PDSCH, the PDSCH on duration, the overlapping degree between the PDSCH and another PDSCH, and overlap degree between the PDSCH and the scheduled PDCCH in the scenario of the mapping type B. The waiting time for the terminal device to complete blind detection on the CORESETs of all the TRPs is not considered. In this way, although the time variable ∆ may prolong the time for processing the PDSCH by the terminal device, the problem in the conventional technology that when the terminal device processes the PDSCH, the time for processing the PDSCH becomes shorter due to waiting of the terminal device for completing blind detection on the CORESETs of all the TRPs cannot be completely resolved. In addition, in a scenario in which a plurality of TRPs are configured for the terminal device, but only one TRP sends DCI, or in a scenario in which a plurality of TRPs send a plurality of pieces of DCI and schedule a plurality of PDSCHs, but the PDSCHs do not overlap, the time variable ∆ does not affect the time for processing the PDSCH by the terminal device. Therefore, an application scenario of this implementation is also limited.

In view of this, an embodiment of this application provides a PDSCH transmission method. As shown in FIG. 7, the method includes the following steps.

S701: A terminal device determines whether a plurality of CORESETs configured by a network device have two different CORESETPoolIndex values.

It should be noted that, in a multi-TRP multi-DCI transmission process, a first TRP and a second TRP are separately associated with two CORESETs whose CORESETPoolIndex values are different, and DCI is sent on the two CORESETs whose CORESETPoolIndex values are different, to separately schedule the first PDSCH and the second PDSCH.

Therefore, if the terminal device determines that there are two different CORESETPoolIndex values in the plurality of CORESETs configured by the network device, it indicates that there are two TRPs that provide a data transmission service for the terminal device, and the two TRPs send two pieces of DCI on the two CORESETs to schedule two PDSCHs for the terminal device. In this case, the terminal device may need to complete blind detection on CORESETs of all TRPs, and then start to process the PDSCH.

If the terminal device determines that there are no two different CORESETPoolIndex values in the plurality of CORESETs configured by the network device, it indicates that multi-TRP multi-DCI transmission is not performed, or a plurality of TRPs send only one piece of DCI on one CORESET to schedule one PDSCH for the terminal device.

In the two different cases, the terminal device may perform different steps, to meet a requirement that a time for processing the PDSCH by the terminal device varies in different cases.

Specifically, if there are no two different CORESETPoolIndex values in the plurality of CORESETs, the terminal device performs S702. If there are two different CORESETPoolIndex values in the plurality of CORESETs, the terminal device performs S703.

S702: The terminal device determines that duration in which the terminal device processes the first PDSCH is second duration.

In this case, a value of the second duration is the value $T_{proc,1}$.

In other words, when the network device sends only one piece of DCI to the terminal device to schedule one PDSCH for the terminal device, the terminal device needs only to complete blind detection to obtain one piece of DCI, to process the PDSCH. Therefore, in this case, the terminal device does not need to additionally prolong a time for processing the PDSCH, to wait for the terminal device to complete blind detection on CORESETs associated with all TRPs. In this case, the terminal device determines that the duration in which the terminal device processes the first PDSCH is the second duration, that is, duration reserved by the terminal device for processing the PDSCH in the conventional technology.

S703: The terminal device determines that duration in which the terminal device processes the first PDSCH is first duration.

The first duration is a sum of the second duration and a preset delay. The preset delay is determined based on a capability of the terminal device to perform blind detection on the CORESET. For example, a preset delay corresponding to a terminal device having a strong capability of performing blind detection on the CORESET is less than a preset delay corresponding to a terminal device having a weak capability of performing blind detection on the CORESET. Specifically, the preset delay is a waiting delay reserved for the terminal device to complete blind detection on a CORESET associated with another TRP after the terminal device performs blind detection on one CORESET and obtains the first DCI.

In other words, when the first TRP and the second TRP separately schedule two PDSCHs to the terminal device, the duration that is for processing the first PDSCH and that is determined by the terminal device is a sum of duration for processing the PDSCH by the terminal device in the conventional technology and a waiting delay reserved for the terminal device to complete blind detection on a CORESET of another TRP after blind detection is completed on one CORESET.

It should be noted that a method for determining duration for processing the first PDSCH is described in S702 and S703. In an actual process, duration for processing another PDSCH by the terminal device may be further determined based on the method, for example, duration in which the terminal device processes the second PDSCH. An implementation thereof is the same as the method for determining the duration for processing the first PDSCH in S702 and S703. Details are not described again in this application.

In an example, the preset delay is related to $d_\mu$, and $d_\mu$ is also related to a value $\mu$.

Table 4 shows possible values of $\mu$ in a PDSCH processing capability 1, and a correspondence between the value $\mu$ and $N_1$.

**Table 4**

| $\mu$ | Time $N_1$ at which the terminal device decodes the PDSCH (PDSCH decoding time $N_1$ [symbols]) | |
|---|---|---|
| | dmrs-AdditionalPosition=pos0 in DMRS-DownlinkConfig in both of dmrs-DownlinkForPDSCH-MappingTypeA, dmrs-DownlinkForPDSCH-MappingTypeB | dmrs-AdditionalPosition≠pos0 in DMRS-DownlinkConfig in either of dmrs-DownlinkForPDSCH-MappingTypeA, dmrs-DownlinkForPDSCH-MappingTypeB or if the higher layer parameter is not configured |
| 0 | $8+d_\mu$ | $N_{1,0}+d_\mu$ |
| 1 | $10+d_\mu$ | $13+d_\mu$ |
| 2 | $17+d_\mu$ | $20+d_\mu$ |
| 3 | $20+d_\mu$ | $24+d_\mu$ |

Table 5 shows possible values of $\mu$ in a PDSCH processing capability 2, and a correspondence between the value $\mu$ and $N_1$.

**Table 5**

| $\mu$ | Time $N_1$ at which the terminal device decodes the PDSCH (PDSCH decoding time $N_1$ [symbols]) |
|---|---|
| | dmrs-AdditionalPosition=pos0 in DMRS-DownlinkConfig in both of dmrs-DownlinkForPDSCH-MappingTypeA, dmrs-DownlinkForPDSCH-MappingTypeB |
| 0 | $3+d_\mu$ |
| 1 | $4.5+d_\mu$ |
| 2 | $9+d_\mu$ for frequency range 1 |

In an implementation of this embodiment of this application, a value of the preset delay may be reported by the terminal device (denoted as Scenario 1), or may be preset in a protocol (denoted as Scenario 2). The following separately provides descriptions.

Scenario 1: The terminal device reports a value of the preset delay.

Specifically, the terminal device determines, based on a PDSCH processing capability of the terminal device, a value of the preset delay corresponding to the terminal device. After that, the terminal device reports the value of the preset delay to the network device, so that the network device determines, based on the value of the preset delay, a time at which the terminal device may report a PUCCH including HARQ information.

Scenario 2: A value of the preset delay is preset in the protocol.

Specifically, in the protocol, different values of preset delays may be configured for different types of terminal devices. After the terminal device accesses the network device, the network device determines, based on a type of the terminal device and a value of a preset delay that is set for this type of terminal device in the protocol, a time at which the terminal device may report a PUCCH including HARQ information. Similarly, the terminal device determines, based on the type of the terminal device and the value of the preset delay that is set for this type of terminal device in the protocol, a time reserved for processing the PDSCH and a possible time for reporting the PUCCH including the HARQ information.

Based on this, the terminal device may determine, based on whether the CORESET has two different CORESETPoolIndex values, a quantity of PDSCHs scheduled by the network device for the terminal device. When the network device schedules two PDSCHs for the terminal device, the first duration for processing the PDSCHs by the terminal device includes a waiting time for the terminal device to complete blind detection on all CORESETs, so that sufficient time is reserved for the terminal device to process the PDSCHs. In this way, the terminal device can process the PDSCH without increasing device complexity. In addition, when the network device schedules one PDSCH for the terminal device, a time reserved by the terminal device for processing the PDSCH is the same as that in the conventional technology. In this way, a time for processing the PDSCH by the terminal device in this scenario can be shortened.

The solutions in the foregoing embodiments of this application may be combined when there is no contradiction.

The foregoing mainly describes the solutions in embodiments of this application from a perspective of interaction between network elements. It may be understood that, to implement the foregoing functions, the network elements such as the network device and the terminal device include at least one of corresponding hardware structures and software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device and the terminal device may be divided into function units based on the method examples. For example, each function unit may be obtained through division based on each corresponding function, or two or more functions may be integrated into one processing unit. The integrated unit may be implemented in a form of hardware, or may be implemented in a form of a software function unit. It should be noted that, in this embodiment of this application, division into the units is an example, and is merely a logical function division. In actual implementation, another division manner may be used.

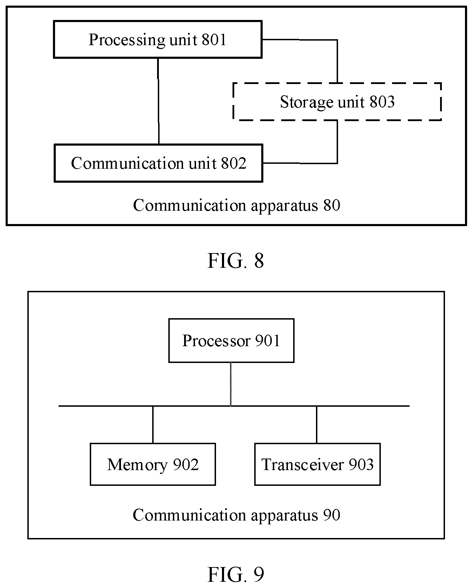

When an integrated unit is used, FIG. 8 is a schematic diagram of a possible structure of a communication apparatus (denoted as a communication apparatus 80) in the foregoing embodiments. The communication apparatus 80 includes a processing unit 801 and a communication unit 802, and may further include a storage unit 803. The schematic diagram of the structure shown in FIG. 8 may be used to show structures of the network device and the terminal device in the foregoing embodiments.

When the schematic diagram of the structure shown in FIG. 8 is used to show the structure of the terminal device in the foregoing embodiment, the processing unit 801 is configured to control and manage an action of the terminal device, for example, control the terminal device to perform S402 in FIG. 4, S402a, S402b, S402c, and S403 in FIG. 5, S402, S404, and S405 in FIG. 6, and S701, S702, and S703 in FIG. 7, and/or an action performed by the terminal device in another process described in the embodiments of this application. The processing unit 801 may communicate with another network entity by using the communication unit 802, for example, communicate with the network device shown in FIG. 1. The storage unit 803 is configured to store program code and data of the terminal device.

When the schematic diagram of the structure shown in FIG. 8 is used to show the structure of the terminal device in the foregoing embodiments, the communication apparatus 80 may be a terminal device, or may be a chip in the terminal device.

When the schematic diagram of the structure shown in FIG. 8 is used to show the structure of the network device in the foregoing embodiments, the processing unit 801 is configured to control and manage an action of the network device, for example, control the network device to perform S401 in FIG. 4, S401a, S401b, S401c, and S403 in FIG. 5, and S401 and S405 in FIG. 6, and/or an action performed by the terminal device in another process described in the embodiments of this application. The processing unit 801 may communicate with another network entity by using the communication unit 802, for example, communicate with the network device shown in FIG. 1. The storage unit 803 is configured to store program code and data of the terminal device.

When the schematic diagram of the structure shown in FIG. 8 is used to show the structure of the network device in the foregoing embodiments, the communication apparatus 80 may be a network device, or may be a chip in the network device.

When the communication apparatus 80 is a terminal device or a network device, the processing unit 801 may be a processor or a controller, and the communication unit 802 may be a communication interface, a transceiver, a transceiver device, a transceiver circuit, a transceiver apparatus, or the like. The communication interface is a collective term, and may include one or more interfaces. The storage unit 803 may be a memory. When the communication apparatus 80 is a chip in a terminal device or a network device, the processing unit 801 may be a processor or a controller, and the communication unit 802 may be an input interface and/or an output interface, a pin, a circuit, or the like. The storage unit 803 may be a storage unit (for example, a register or a cache) in the chip, or may be a storage unit (for example, a read-only memory (read-only memory, ROM for short) or a random access memory (random access memory, RAM for short) that is in the terminal device or the network device and that is located outside the chip.

The communication unit may also be referred to as a transceiver unit. An antenna and a control circuit that have receiving and sending functions in the communication apparatus 80 may be considered as the communication unit 802 of the communication apparatus 80, and a processor that has a processing function may be considered as the processing unit 801 of the communication apparatus 80. Optionally, a component configured to implement a receiving function in the communication unit 802 may be considered as a receiving unit. The receiving unit is configured to perform a receiving step in embodiments of this application. The receiving unit may be a receiving device, a receiver, a receiver circuit, or the like. A component configured to implement a sending function in the communication unit 802 may be considered as a sending unit. The sending unit is configured to perform a sending step in embodiments of this application. The sending unit may be a transmitting device, a transmitter, a sending circuit, or the like.

When the integrated unit in FIG. 8 is implemented in a form of a software function module and sold or used as an independent product, the integrated unit may be stored in a computer-readable storage medium. Based on such an understanding, the technical solutions in embodiments of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The storage medium storing the computer software product includes any medium that can store program code, such as a USB flash drive, a removable hard disk, a read-only memory, a random access memory, a magnetic disk, or an optical disc.

The unit in FIG. 8 may alternatively be referred to as a module. For example, the processing unit may be referred to as a processing module.

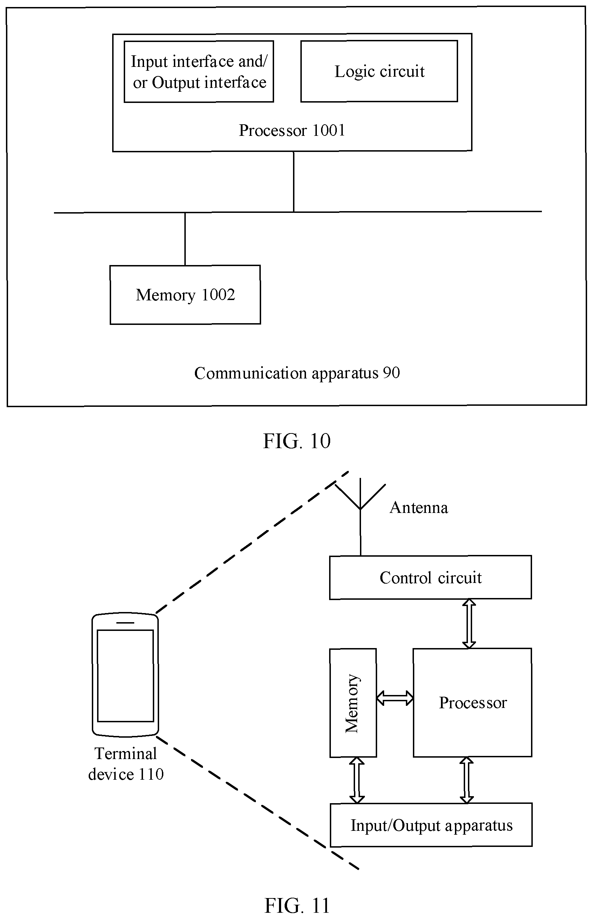

An embodiment of this application further provides a schematic diagram of a hardware structure of a communication apparatus (denoted as a communication apparatus 90). Refer to FIG. 9 or FIG. 10, the communication apparatus 90 includes a processor 901. Optionally, the communication apparatus 90 may further include a memory 902 connected to the processor 901.

In a first possible implementation, refer to FIG. 9, the communication apparatus 90 further includes a transceiver 903. The processor 901, the memory 902, and the transceiver 903 are connected through a bus. The transceiver 903 is configured to communicate with another device or a communication network. Optionally, the transceiver 903 may include a transmitting device and a receiving device. A component configured to implement a receiving function in the transceiver 903 may be considered as the receiving device. The receiving device is configured to perform a receiving step in embodiments of this application. A component configured to implement a sending function in the transceiver 903 may be considered as the transmitting device. The transmitting device is configured to perform a sending step in embodiments of this application.

Based on the first possible implementation, the schematic diagram of the structure shown in FIG. 9 may be used to show a structure of the network device or the terminal device in the foregoing embodiments.

When the schematic diagram of the structure shown in FIG. 9 is used to show the structure of the terminal device in the foregoing embodiments, the processor 901 is configured to control and manage an action of the terminal device. For example, the processor 901 is configured to support the terminal device in performing S402 in FIG. 4, S402a, S402b, S402c, and S403 in FIG. 5, S402, S404, and S405 in FIG. 6, and S701, S702, and S703 in FIG. 7, and/or an action performed by the terminal device in another process described in embodiments of this application. The processor 901 may communicate with another network entity by using the transceiver 903, for example, communicate with the network device shown in FIG. 1. The memory 902 is configured to store program code and data of the terminal device.

When the schematic diagram of the structure shown in FIG. 9 is used to show the structure of the network device in the foregoing embodiments, the processor 901 is configured to control and manage an action of the network device. For example, the processor 901 is configured to support the network device in performing S401 in FIG. 4, S401a, S401b, S401c, and S403 in FIG. 5, and S401 and S405 in FIG. 6, and/or an action performed by the network device in another process described in embodiments of this application. The processor 901 may communicate with another network entity by using the transceiver 903, for example, communicate with the terminal device shown in FIG. 1. The memory 902 is configured to store program code and data of the network device.

In a second possible implementation, the processor 901 includes a logic circuit and at least one of an input interface and an output interface. The output interface is configured to perform a sending action in a corresponding method, and the input interface is configured to perform a receiving action in the corresponding method.

Based on the second possible implementation, refer to FIG. 10, the schematic diagram of the structure shown in FIG. 10 may be used to show a structure of the network device or the terminal device in the foregoing embodiments.

When the schematic diagram of the structure shown in FIG. 10 is used to show the structure of the terminal device in the foregoing embodiments, a processor 1001 is configured to control and manage an action of the terminal device. For example, the processor 1001 is configured to support the terminal device in performing S402 in FIG. 4, S402a, S402b, S402c, and S403 in FIG. 5, and S402, S404, and S405 in FIG. 6, and/or an action performed by the terminal device in another process described in embodiments of this application. The processor 1001 may communicate with another network entity by using at least one of an input interface and an output interface, for example, communicate with the network device shown in FIG. 1. A memory 1002 is configured to store program code and data of the terminal device.

When the schematic diagram of the structure shown in FIG. 10 is used to show the structure of the network device in the foregoing embodiments, the processor 1001 is configured to control and manage an action of the network device. For example, the processor 1001 is configured to support the network device in performing S401 in FIG. 4, S401a, S401b, S401c, and S403 in FIG. 5, and S401 and S405 in FIG. 6, and/or an action performed by the network device in another process described in embodiments of this application. The processor 1001 may communicate with another network entity by using at least one of an input interface and an output interface, for example, communicate with the terminal device shown in FIG. 1. The memory 1002 is configured to store program code and data of the network device.

FIG. 9 and FIG. 10 may alternatively show a system chip in a network device. In this case, an action performed by the network device may be implemented by the system chip. For a specific action performed, refer to the foregoing descriptions. Details are not described herein again. FIG. 9 and FIG. 10 may alternatively show a system chip in a terminal device. In this case, an action performed by the terminal device may be implemented by the system chip. For a specific action performed, refer to the foregoing descriptions. Details are not described herein again.

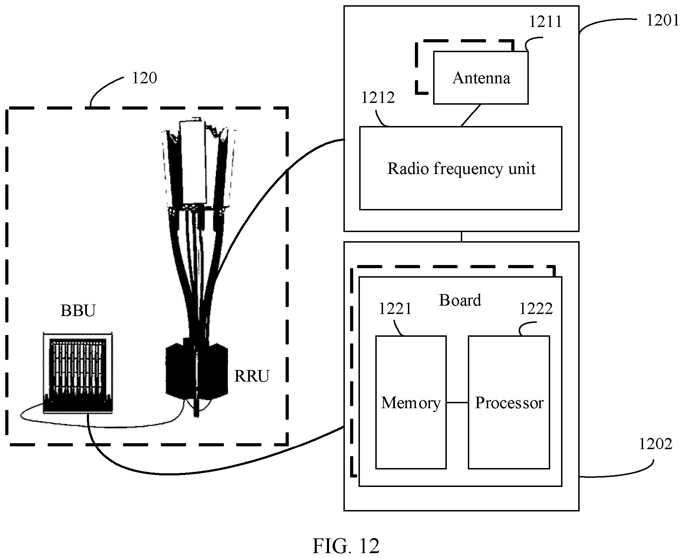

In addition, an embodiment of this application further provides schematic diagrams of hardware structures of a terminal device (denoted as a terminal device 110) and a network device (denoted as a network device 120). For details, refer to FIG. 11 and FIG. 12 respectively.

FIG. 11 is the schematic diagram of the hardware structure of the terminal device 110. For ease of description, FIG. 11 shows only main components of the terminal device. As shown in FIG. 11, the terminal device 110 includes a processor, a memory, a control circuit, an antenna, and an input/output apparatus.

The processor is mainly configured to process a communication protocol and communication data, control the entire terminal device, execute a software program, and process data of the software program, for example, control the terminal device to perform S402 in FIG. 4, S402a, S402b, S402c, and S403 in FIG. 5, and S402, S404, and S405 in FIG. 6, and/or an action performed by the terminal device in another process described in embodiments of this application. The memory is mainly configured to store a software program and data. The control circuit (which may also be referred to as a radio frequency circuit) is mainly configured to perform conversion between a baseband signal and a radio frequency signal, and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to receive data input by a user and output data to the user.

After the terminal device is powered on, the processor may read the software program in the memory, interpret and execute instructions of the software program, and process the data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of the electromagnetic wave through the antenna. When data is sent to the terminal device, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 11 shows only one memory and one processor. An actual terminal device may include a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 11 is integrated with functions of the baseband processor and the central processing unit. A person skilled in the art may understand that, the baseband processor and the central processing unit may be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program. The processor executes the software program to implement a baseband processing function.

FIG. 12 is the schematic diagram of the hardware structure of the network device 120. The network device 120 may include one or more radio frequency units, such as a remote radio unit (remote radio unit, RRU for short) 1201 and one or more baseband units (baseband unit, BBU for short) (which may also be referred to as digital units (digital unit, DU for short)) 1202.

The RRU 1201 may be referred to as a transceiver unit, a transceiver device, a transceiver circuit, a transceiver, or the like, and may include at least one antenna 1211 and a radio frequency unit 1212. The RRU 1201 is mainly configured to receive and send a radio frequency signal and perform conversion between a radio frequency signal and a baseband signal. The RRU 1201 and the BBU 1202 may be physically disposed together, or may be physically disposed separately, for example, a distributed base station.

The BBU 1202 is a control center of the network device, may also be referred to as a processing unit, and is mainly configured to complete baseband processing functions such as channel coding, multiplexing, modulation, and spectrum spreading.

In an embodiment, the BBU 1202 may include one or more boards. A plurality of boards may jointly support a radio access network (such as an LTE network) of a single access standard, or may separately support radio access networks (such as an LTE network, a 5G network, or another network) of different access standards. The BBU 1202 further includes a memory 1221 and a processor 1222. The memory 1221 is configured to store necessary instructions and data. The processor 1222 is configured to control the network device to perform a necessary action. The memory 1221 and the processor 1222 may serve one or more boards. That is, a memory and a processor may be disposed individually on each board. Alternatively, a plurality of boards may share a same memory and a same processor. In addition, a necessary circuit may further be disposed on each board.

It should be understood that the network device 120 shown in FIG. 12 can perform S401 in FIG. 4, S401a, S401b, S401c, and S403 in FIG. 5, and S401 and S405 in FIG. 6, and/or an action performed by the network device in another process described in embodiments of this application. Operations, functions, or operations and functions of modules in the network device 120 are separately set to implement corresponding procedures in the foregoing method embodiments. For details, refer to the descriptions in the foregoing method embodiments. To avoid repetition, detailed descriptions are properly omitted herein.

In an implementation process, steps of the methods in embodiments may be completed by using a hardware integrated logical circuit in the processor, or by using instructions in a form of software. The steps of the methods disclosed with reference to embodiments of this application may be directly performed and completed by a hardware processor, or may be performed and completed by using a combination of hardware and software modules in the processor.

The processor in this application may include but is not limited to at least one of the following computing devices that run software: a central processing unit (central processing unit, CPU), a microprocessor, a digital signal processor (DSP), a microcontroller unit (microcontroller unit, MCU), or an artificial intelligence processor. Each computing device may include one or more cores configured to perform an operation or processing by executing software instructions. The processor may be an independent semiconductor chip; or may be integrated with another circuit to form a semiconductor chip, for example, may form a SoC (system-on-a-chip) with another circuit (for example, a codec circuit, a hardware acceleration circuit, or various buses and interface circuits); or may be integrated into an ASIC as a built-in processor of the ASIC. The ASIC integrated with the processor may be independently packaged or may be packaged together with another circuit. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmable-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed to a computer. However, the memory is not limited thereto.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communication system, including the foregoing network device and the foregoing terminal device.

An embodiment of this application further provides a chip. The chip includes a processor and an interface circuit. The interface circuit is coupled to the processor. The processor is configured to run computer programs or instructions, to implement the foregoing method. The interface circuit is used to communicate with another module outside the chip.

All or a part of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, a person skilled in the art may understand and implement other variations of the disclosed embodiments by viewing the accompanying drawings, disclosed content, and appended claims. In the claims, the term "comprise" (comprising) does not exclude another component or another step, and "a" or "one" does not exclude a case of plurality. A single processor or another unit may implement several functions enumerated in the claims. Some measures are described in dependent claims that are different from each other, but this does not indicate that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. In this case, this application is intended to cover these modifications and variations of this application provided that they fall within the scope of protection defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A physical downlink shared channel PDSCH transmission method, comprising:

    receiving, by a terminal device, first downlink control information DCI and second DCI, wherein the first DCI is associated with a first control resource set CORESET, the second DCI is associated with a second CORESET, the first DCI is used for scheduling a first PDSCH, the second DCI is used for scheduling a second PDSCH, and the first PDSCH and the second PDSCH have completely overlapping time-frequency resources, wherein the first DCI and the second DCI each have first indication information, and the first indication information in the first DCI is the same as that in the second DCI; the first indication information comprised in the first DCI and the second DCI indicates whether one or more time-frequency resource groups in the first PDSCH and the second PDSCH are available; the time-frequency resource group comprises one or more resource sets, and the time-frequency resource group is configured by using radio resource control RRC signaling; and configuration information of the first CORESET comprises first identification information, configuration information of the second CORESET comprises second identification information, and the first identification information and the second identification information have different values.

2.  The PDSCH transmission method according to claim 1, wherein if the first DCI has the first indication information, but the second DCI does not have the first indication information, one piece of DCI having the first indication information is the first DCI; or
    if the first DCI does not have the first indication information, but the second DCI has the first indication information, one piece of DCI having the first indication information is the second DCI.

3. The PDSCH transmission method according to claim 1, wherein if the first DCI and the second DCI each have the first indication information, one piece of DCI having the first indication information is DCI that is in the first DCI and the second DCI and that meets a preset condition.

4. The PDSCH transmission method according to claim 3, wherein if the first indication information in the first DCI is the same as that in the second DCI, the DCI that meets the preset condition is either the first DCI or the second DCI.

5. The PDSCH transmission method according to claim 3, wherein if the first indication information in the first DCI is different from that in the second DCI, the DCI that meets the preset condition is any one of the following:

DCI associated with a CORESET whose control resource set pool index CORESETPoolIndex is 0;
DCI associated with a CORESET whose CORESETPoolIndex is 1;
DCI associated with a CORESET with a largest CORESET identifier CORESET-ID;
DCI associated with a CORESET with a smallest CORESET-ID;
DCI associated with a CORESET whose start symbol position is ranked first;
DCI associated with a CORESET whose start symbol position is same and whose end symbol position is ranked first;
DCI associated with a CORESET that is first blindly detected by the terminal device;
DCI associated with a CORESET that is last blindly detected by the terminal device; and
DCI last received by the terminal device.

6. The PDSCH transmission method according to any one of claims 1 to 5, further comprising:
sending, by the terminal device, second indication information to a network device, wherein the second indication information indicates whether the terminal device supports receiving of N pieces of DCI, and $N \geq 2$; a CORESET-PoolIndex in a plurality of CORESETs associated with the N pieces of DCI has two different values, and values of first indication information comprised in the N pieces of DCI are different; and N PDSCHs scheduled by the N pieces of DCI have overlapping time-frequency resources.

7. The PDSCH transmission method according to any one of claims 1 to 6, further comprising:

determining, by the terminal device, whether a plurality of CORESETs configured by the network device have two different CORESETPoolIndex values;
if the plurality of CORESETs configured by the network device have two different CORESETPoolIndex values, determining, by the terminal device, that duration in which the terminal device processes the first PDSCH is first duration; or
if the plurality of CORESETs configured by the network device do not have two different CORESETPoolIndex values, determining, by the terminal device, that duration in which the terminal device processes the first PDSCH is second duration, wherein the first duration is a sum of the second duration and a preset delay.

8. A physical downlink shared channel PDSCH transmission method, comprising:

sending, by a network device, first downlink control information DCI on a first control resource set, and sending second DCI on a second CORESET, wherein the first DCI is used for scheduling a first PDSCH, the second DCI is used for scheduling a second PDSCH, and the first PDSCH and the second PDSCH have completely overlapping time-frequency resources, wherein
the first DCI and the second DCI each have first indication information, and the first indication information in the first DCI is the same as that in the second DCI; the first indication information comprised in the first DCI and the second DCI indicates whether one or more time-frequency resource groups in the first PDSCH and the second PDSCH are available; the time-frequency resource group comprises one or more resource sets, and the time-frequency resource group is configured by using RRC signaling; and configuration information of the first CORESET comprises first identification information, configuration information of the second CORESET comprises second identification information, and the first identification information and the second identification information have different values.

9. The PDSCH transmission method according to claim 8, wherein one piece of DCI in the first DCI and the second DCI has the first indication information, and the DCI is DCI that meets a preset condition.

10. The PDSCH transmission method according to claim 8, wherein the first DCI and the second DCI have the same first indication information; and
one piece of DCI having the first indication information is either the first DCI or the second DCI.

11. The PDSCH transmission method according to claim 8, wherein the first DCI and the second DCI have different first indication information; and
one piece of DCI having the first indication information is DCI that is in the first DCI and the second DCI and that meets a preset condition.

12. The PDSCH transmission method according to claim 9 or 11, wherein the DCI that meets the preset condition is any one of the following:

DCI associated with a CORESET whose control resource set pool index CORESETPoolIndex is 0;
DCI associated with a CORESET whose CORESETPoolIndex is 1;
DCI associated with a CORESET with a largest CORESET identifier CORESET-ID;
DCI associated with a CORESET with a smallest CORESET-ID;
DCI associated with a CORESET whose start symbol position is ranked first;
DCI associated with a CORESET whose start symbol position is same and whose end symbol position is ranked first;
DCI associated with a CORESET that is first blindly detected by a terminal device;
DCI associated with a CORESET that is last blindly detected by the terminal device; and
DCI last received by the terminal device.

13. The PDSCH transmission method according to any one of claims 8 to 12, further comprising:
receiving, by the network device, second indication information from the terminal device, wherein the second indication information indicates whether the terminal device supports receiving of N pieces of DCI, and $N \geq 2$; a CORESETPoolIndex in a plurality of CORESETs associated with the N pieces of DCI has two different values, and values of first indication information comprised in the N pieces of DCI are different; and N PDSCHs scheduled by the N pieces of DCI have overlapping time-frequency resources.

14. A terminal device, comprising a communication unit and a processing unit, wherein

the processing unit is configured to indicate the communication unit to receive first downlink control information DCI and second DCI, wherein the first DCI is associated with a first control resource set CORESET, the second DCI is associated with a second CORESET, the first DCI is used for scheduling a first PDSCH, the second DCI is used for scheduling a second PDSCH, and the first PDSCH and the second PDSCH have completely overlapping time-frequency resources, wherein
the first DCI and the second DCI each have first indication information, and the first indication information in the first DCI is the same as that in the second DCI; the first indication information comprised in the first DCI and the second DCI indicates whether one or more time-frequency resource groups in the first PDSCH and the second PDSCH are available; the time-frequency resource group comprises one or more resource sets, and the time-frequency resource group is configured by using radio resource control RRC signaling; and configuration information of the first CORESET comprises first identification information, configuration information of the second CORESET comprises second identification information, and the first identification information and the second identification information have different values.

15. The terminal device according to claim 14, wherein if the first DCI has the first indication information, but the second DCI does not have the first indication information, one piece of DCI having the first indication information is the first DCI; or
if the first DCI does not have the first indication information, but the second DCI has the first indication information, one piece of DCI having the first indication information is the second DCI.

16. The terminal device according to claim 14, wherein if the first DCI and the second DCI each have the first indication information, one piece of DCI having the first indication information is DCI that is in the first DCI and the second DCI and that meets a preset condition.

17. The terminal device according to claim 16, wherein if the first indication information in the first DCI is the same as that in the second DCI, the DCI that meets the preset condition is either the first DCI or the second DCI.

18. The terminal device according to claim 17, wherein if the first indication information in the first DCI is different from that in the second DCI, the DCI that meets the preset condition is any one of the following:

DCI associated with a CORESET whose control resource set pool index CORESETPoolIndex is 0;
DCI associated with a CORESET whose CORESETPoolIndex is 1;
DCI associated with a CORESET with a largest CORESET identifier CORESET-ID;
DCI associated with a CORESET with a smallest CORESET-ID;
DCI associated with a CORESET whose start symbol position is ranked first;
DCI associated with a CORESET whose start symbol position is same and whose end symbol position is ranked first;
DCI associated with a CORESET that is first blindly detected by the terminal device;
DCI associated with a CORESET that is last blindly detected by the terminal device; and
DCI last received by the terminal device.

19. The terminal device according to any one of claims 14 to 18, wherein the processing unit is further configured to indicate the communication unit to send second indication information to a network device, wherein the second indication information indicates whether the terminal device supports receiving of N pieces of DCI, and $N \geq 2$; a CORESETPoolIndex in a plurality of CORESETs associated with the N pieces of DCI has two different values, and values of first indication information comprised in the N pieces of DCI are different; and N PDSCHs scheduled by the N pieces of DCI have overlapping time-frequency resources.

20. The terminal device according to any one of claims 14 to 19, wherein the processing unit is further configured to:

determine whether a plurality of CORESETs configured by the network device have two different CORESETPoolIndex values;
if the plurality of CORESETs configured by the network device have two different CORESETPoolIndex values, determine that duration in which the terminal device processes the first PDSCH is first duration; or
if the plurality of CORESETs configured by the network device do not have two different CORESETPoolIndex values, determine that duration in which the terminal device processes the first PDSCH is second duration, wherein the first duration is a sum of the second duration and a preset delay.

21. A network device, comprising a communication unit and a processing unit, wherein

the processing unit is configured to indicate the communication unit to send first downlink control information DCI on a first control resource set, and send second DCI on a second CORESET, wherein the first DCI is used for scheduling a first PDSCH, the second DCI is used for scheduling a second PDSCH, and the first PDSCH and the second PDSCH have completely overlapping time-frequency resources, wherein
the first DCI and the second DCI each have first indication information, and the first indication information in the first DCI is the same as that in the second DCI; the first indication information comprised in the first DCI and the second DCI indicates whether one or more time-frequency resource groups in the first PDSCH and the second PDSCH are available; the time-frequency resource group comprises one or more resource sets, and the time-frequency resource group is configured by using RRC signaling; and configuration information of the first CORESET comprises first identification information, configuration information of the second CORESET comprises second identification information, and the first identification information and the second identification information have different values.

22. The network device according to claim 21, wherein one piece of DCI in the first DCI and the second DCI has the first indication information, and the DCI is DCI that meets a preset condition.

23. The network device according to claim 21, wherein the first DCI and the second DCI have the same first indication information; and
one piece of DCI having the first indication information is either the first DCI or the second DCI.

24. The network device according to claim 21, wherein the first DCI and the second DCI have different first indication information; and
one piece of DCI having the first indication information is DCI that is in the first DCI and the second DCI and that meets a preset condition.

25. The network device according to claim 22 or 24, wherein the DCI that meets the preset condition is any one of the following:

DCI associated with a CORESET whose control resource set pool index CORESETPoolIndex is 0;
DCI associated with a CORESET whose CORESETPoolIndex is 1;
DCI associated with a CORESET with a largest CORESET identifier CORESET-ID;
DCI associated with a CORESET with a smallest CORESET-ID;
DCI associated with a CORESET whose start symbol position is ranked first;
DCI associated with a CORESET whose start symbol position is same and whose end symbol position is ranked first;
DCI associated with a CORESET that is first blindly detected by a terminal device;
DCI associated with a CORESET that is last blindly detected by the terminal device; and
DCI last received by the terminal device.

26. The network device according to any one of claims 21 to 25, wherein the processing unit is further configured to indicate the communication unit to receive second indication information from the terminal device, wherein the second indication information indicates whether the terminal device supports receiving of N pieces of DCI, and $N \geq 2$; a CORESETPoolIndex in a plurality of CORESETs associated with the N pieces of DCI has two different values, and values of first indication information comprised in the N pieces of DCI are different; and N PDSCHs scheduled by the N pieces of DCI have overlapping time-frequency resources.

27. A communication apparatus, wherein the apparatus comprises a processor and a storage medium, the storage medium comprises instructions, and when the instructions are run by the processor, the apparatus is enabled to perform the method according to any one of claims 1 to 13.

28. A computer-readable storage medium, wherein the computer-readable storage medium stores instructions, and when the instructions are run on a computer, the computer is enabled to perform the method according to any one of claims 1 to 13.

Communication system 100

Network device 10 — Terminal device 20

FIG. 1

First TRP

First DCI

First DCI

Second TRP

First PDSCH

Second PDSCH

Terminal device

FIG. 2

First TRP

First DCI

Second TRP

First PDSCH (a part)

First PDSCH (a part)

Terminal device

FIG. 3

```
┌─────────────┐                                    ┌─────────────┐
│   Network   │                                    │  Terminal   │
│   device    │                                    │   device    │
└──────┬──────┘                                    └──────┬──────┘
       │   S401: Send first      S402: Receive the        │
       │   DCI and second         first DCI and the       │
       │        DCI               second DCI              │
       │────────────────────►  ...  ──────────────────►   │
       │                                                  │
       │                                                  │
```

FIG. 4

```
┌──────────┐    ┌──────────┐    ┌──────────┐    ┌──────────┐
│          │    │          │    │          │    │  First   │
│First TRP │    │  Second  │    │ Terminal │    │ network  │
│          │    │   TRP    │    │  device  │    │  device  │
└────┬─────┘    └────┬─────┘    └────┬─────┘    └────┬─────┘
     │               │               │               │
     │               │               │  S403: Configure a
     │               │               │  plurality of CORESETs
     │               │               │◄─ ─ ─ ─ ─ ─ ─ ─│
     │               │   S401b:    S402b:             │
     │               │    Send     Receive the        │
     │               │  second DCI second DCI         │
     │               │──────────► ... ─────────────►  │
     │               │                                │
     │               │             S402a:             │
     │               │             Receive the        │
     │  S401a: Send first DCI      first DCI          │
     │───────────────────────────► ... ───────────►   │
     │                                                │
  ┌ ─┴─ ─ ─ ─ ─ ┐                                     │
  │ Determine a │ ┌─ S401c                            │
  │ target DCI from │                                 │
  │ the first DCI and │                               │
  │ the second DCI │                                  │
  └ ─┬─ ─ ─ ─ ─ ┘  ┌ ─┴─ ─ ─ ─ ─ ┐                    │
     │             │ Determine a │ ┌─ S401c           │
     │             │ target DCI from │    ┌ ─┴─ ─ ─ ─ ─ ┐
     │             │ the first DCI and │  │ Determine a │ ┌─ S402c
     │             │ the second DCI │    │ target DCI from │
     │             └ ─┬─ ─ ─ ─ ─ ┘      │ the first DCI and │
     │                │                 │ the second DCI │
     │                │                 └ ─┬─ ─ ─ ─ ─ ┘  │
     │                │                    │             │
```

FIG. 5

Network device

Terminal device

S405: Report second indication information

S401: Send first DCI and second DCI

S402: Receive the first DCI and the second DCI

...

Determine, based on a target DCI, whether one or more time-frequency resource groups are available when a first PDSCH and a second PDSCH are received — S404

FIG. 6

A terminal device determines whether a plurality of CORESETs configured by a network device have two different CORESETPoolIndex values — S701

No

Yes

The terminal device determines that duration in which the terminal device processes a first PDSCH is second duration — S702

The terminal device determines that duration in which the terminal device processes a first PDSCH is first duration — S703

FIG. 7

Processing unit 801

Storage unit 803

Communication unit 802

Communication apparatus 80

FIG. 8

Processor 901

Memory 902

Transceiver 903

Communication apparatus 90

FIG. 9

Input interface and/ or Output interface

Logic circuit

Processor 1001

Memory 1002

Communication apparatus 90

FIG. 10

Antenna

Control circuit

Memory

Processor

Terminal device 110

Input/Output apparatus

FIG. 11

FIG. 12

## INTERNATIONAL SEARCH REPORT

| International application No. |
|---|
| **PCT/CN2021/093528** |

**A.   CLASSIFICATION OF SUBJECT MATTER**

H04W 72/04(2009.01)i

According to International Patent Classification (IPC) or to both national classification and IPC

**B.   FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 第二, 第一, 多, 两, 发送接收点, 接入点, 指示, 重叠, 相同, 一致, 共同, 资源, 时频, 干扰, second, first, multiple, two, TRP, AP, DCI, indicat+, PDSCH, lapp+, overlap+, same, identical+, common, resource, RE, RB, time-frequency, multi-TRP, interference, multi-DCI

**C.   DOCUMENTS CONSIDERED TO BE RELEVANT**

| Category* | Citation of document, with indication, where appropriate, of the relevant passages | Relevant to claim No. |
|---|---|---|
| A | CN 111106898 A (VIVO COMMUNICATION TECHNOLOGY CO., LTD.) 05 May 2020 (2020-05-05)<br>    description, paragraphs [0045]-[0129] | 1-28 |
| A | CN 111148260 A (HUAWEI TECHNOLOGIES CO., LTD.) 12 May 2020 (2020-05-12)<br>    entire document | 1-28 |
| A | US 2019349977 A1 (QUALCOMM INC.) 14 November 2019 (2019-11-14)<br>    entire document | 1-28 |
| A | HUAWEI et al. "Discussion on UE performance requirements for Multi-TRP in NR eMIMO"<br>*3GPP TSG-RAN WG4 Meeting #94-e R4-2001466*, 06 March 2020 (2020-03-06),<br>    entire document | 1-28 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2021** | **12 August 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/093528**

| Patent document cited in search report | | | Publication date (day/month/year) | Patent family member(s) | | | Publication date (day/month/year) |
|---|---|---|---|---|---|---|---|
| CN | 111106898 | A | 05 May 2020 | None | | | |
| CN | 111148260 | A | 12 May 2020 | WO | 2020088551 | A1 | 07 May 2020 |
| US | 2019349977 | A1 | 14 November 2019 | EP | 3791514 | A1 | 17 March 2021 |
| | | | | CN | 112088515 | A | 15 December 2020 |
| | | | | WO | 2019217272 | A1 | 14 November 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010414782